(19) Europäisches Patentamt
European Patent Office
Office européen des brevets

(11) EP 2 223 972 B1

(12) **EUROPEAN PATENT SPECIFICATION**

(45) Date of publication and mention of the grant of the patent:
**16.10.2013 Bulletin 2013/42**

(51) Int Cl.:
***C09B 67/08*** (2006.01) ***C09D 11/00*** (2006.01)
***C09B 69/10*** (2006.01) ***C09B 67/20*** (2006.01)

(21) Application number: **10000871.3**

(22) Date of filing: **28.01.2010**

(54) **Pigment composition, method of producing water-based pigment dispersion, water-based ink for inkjet recording**

Pigmentzusammensetzung, Verfahren zur Herstellung der Pigmentdispersion auf Wasserbasis und Tinte auf Wasserbasis zur Tintenstrahlaufzeichnung

Composition de pigment, procédé de production de dispersion de pigment à base d'eau, encre à base d'eau pour enregistrement à jet d'encre

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.02.2009 JP 2009042294**

(43) Date of publication of application:
**01.09.2010 Bulletin 2010/35**

(73) Proprietor: **FUJIFILM Corporation**
**Minato-ku**
**Tokyo (JP)**

(72) Inventors:
- **Inushima, Reiko**
**Ashigarakami-gun**
**Kanagawa (JP)**
- **Hosokawa, Takafumi**
**Ashigarakami-gun,**
**Kanagawa (JP)**
- **Yasuda, Koji**
**Ashigarakami-gun,**
**Kanagawa (JP)**
- **Shibata, Naoya**
**Ashigarakami-gun,**
**Kanagawa (JP)**

(74) Representative: **HOFFMANN EITLE**
**Patent- und Rechtsanwälte**
**Arabellastrasse 4**
**81925 München (DE)**

(56) References cited:
**EP-A1- 1 739 141 WO-A2-2008/123601**

- **SOLARO R ET AL: "Synthesis,stereochemistry and fluorescence properties of polystyrenes", EUROPEAN POLYMER JOURNAL, PERGAMON PRESS LTD. OXFORD, GB, vol. 19, no. 5, 1 January 1983 (1983-01-01), pages 43343-8, XP008023225, ISSN: 0014-3057, DOI: DOI: 10.1016/0014-3057(83)90119-2**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 223 972 B1

## Description

BACKGROUND OF THE INVENTION

[Field of Invention]

The present invention relates to a pigment composition, a method of producing a water-based pigment dispersion, and a water-based ink for inkjet recording.

[Related Art]

In recent years, there has been an increasing trend towards providing paint and ink (also simply referred to as "ink" hereinafter) in a water-based substance in response to an increasing need for, for example, resource protection, environmental preservation or improvement in operational stability. The properties desired for water-based paints and water-based inks are the properties of a pigment dispersion such as flowability, storage stability, gloss of film, clarity and coloring power, which are similar to those desired for an oil-based paint or an oil-based ink. The properties of a pigment dispersion are greatly dependent on the particle diameter of the pigment. In particular, for example, a pigment dispersion containing a pigment with a smaller particle diameter is desired for inkjet inks.
However, most pigments do not offer a satisfactory quality when dispersed by an ordinary dispersing method since they are remarkably unsuitable with respect to water-based vehicles in terms of pigment dispersibility or the like.
In addition, it is generally known that a smaller particle diameter of pigment results in lower stability of dispersion.
The use of various kinds of additives such as a water-based pigment dispersing resin or a surfactant has hitherto been studied. However, a water-based paint or a water-based ink which is suitable with respect to each of the foregoing and is comparable with conventional high quality oil-based paints or oil-based inks, has not been obtained.
As a technology relating to such a problem, an aqueous ink in which the dispersant polymer has an aromatic ring and the content of the aromatic ring is 20% to 70% has been disclosed (see, for example, the specification of United States Patent Application Publication (US-Pub.) No. 2005/0124726).
Moreover, a pigment dispersion in which a pigment is dispersed in an alcohol solvent by using a dispersant having an anthraquinone structure has been disclosed (see, for example, Japanese Patent Application Laid-Open (JP-A) No. 2001-172522).
WO 2008/123601 A2 provides a pigment-dispersed composition comprising at least a resin having a pendant group containing a nitrogen-containing heterocyclic ring and an ethylenic unsaturated double bond in the main skeleton, a pigment and a solvent, wherein said composition has good storage stability in the solution state.
Additionally, an ink composition comprising at least a colorant and a polymer having a heterocyclic moiety forming a colorant is described which exhibits good dispersibility of fine colorants (EP 1739 141 A1).
Non-patent literature 1 further discloses the synthesis and characterization of polystyrene(s) bearing carbazole substituents.
Non- patent literature 1:

R. Solaro, G. Galli, F. Masi, A. Ledwith, E. Chiellini, Eur. Polym. J., 1983, Vol. 19, No. 5, p. 433-438. "Synthesis, stereochemistry and fluorescence properties of polystyrenes having carbazole substituents".

It is generally known that the stability of a pigment dispersion is decreased by finely dispersing the pigment and decreasing the particle diameter thereof. The inventors, however, have found that when attempting to obtain a fine pigment dispersion by using the dispersant described in US-Pub. No. 2005/0124726 or JP-A No. 2001-172522, there is problem in that the pigment dispersibility and the stability over time are not sufficiently satisfactory.
The present invention addresses the above issues and provides a water-based pigment composition excellent in stability over time, in which a pigment is finely dispersed. The invention further provides a method of producing a water-based pigment dispersion excellent in stability over time, in which a pigment is finely dispersed, and a water-based ink for inkjet recording containing the water-based pigment dispersion produced using the method.
More specifically, according to a first aspect of the present invention, there may be provided a water-based pigment composition including, a pigment; a dispersant; and water, the dispersant including: a repeating unit including an ionic group; at least one of a repeating unit represented by the following Formula (2) or a repeating unit represented by the following Formula (3); and a repeating unit represented by the following Formula (1), a content of the repeating unit represented by Formula (1) being 20% by mass or more but less than 50% by mass with respect to a total amount of repeating units represented by Formulae (1) to (3).

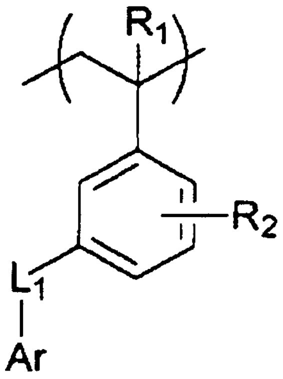

Formula (1)

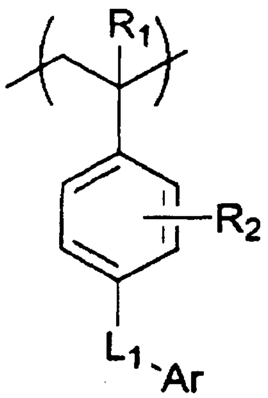

Formula (2)

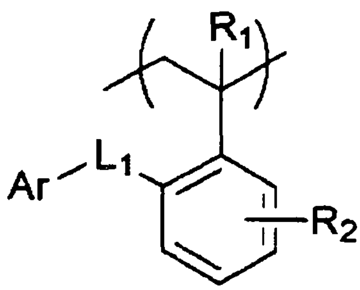

Formula (3)

In Formulae (1) to (3), $R_1$ represents a hydrogen atom or a methyl group; $R_2$ represents a hydrogen atom or a substituent; $L_1$ represents a single bond, or a divalent linkage group including at least one selected from the group consisting of an alkylene group having 1 to 12 carbon atoms, an alkenylene group having 2 to 12 carbon atoms, an oxyalkylene group having 2 to 6 carbon atoms, -CO-, $-N(R_3)-$, $-CON(R_3)-$, -COO-, -O-, -S-, - SO- and $-SO_2-$; $R_3$ represents a hydrogen atom or an alkyl group having 1 to 6 carbon atoms; and Ar represents a monovalent group derived from: a condensed aromatic ring compound having 8 or more carbon atoms, a hetero ring compound condensed with (an) aromatic ring(s), or a compound containing two or more benzene rings linked to each other.

Further, according to a second aspect of the present invention, a producing method of a water- based pigment dispersion including: obtaining a mixture by mixing the dispersant in accordance with the first aspect of the invention, a pigment, an organic solvent capable of dissolving the dispersant, and water or a water- based carrier medium which contains water and at least one organic solvent; and removing at least a part of the organic solvent capable of dissolving the dispersant from the mixture, may be provided.

Furthermore, according to a third aspect of the present invention, a water- based ink for inkjet recording, including a water- based pigment dispersion obtained by the producing method of a water- based pigment dispersion in accordance with the second aspect of the invention, may be provided.

DETAILED DESCRIPTION OF THE INVENTION

The present inventors found, after studying hard the problems, that the objects to solve the problems may be achieved by the following items <1> to <12>.

<1> A water-based pigment composition including: a pigment; a dispersant; and water, the dispersant including: a repeating unit including an ionic group; at least one of a repeating unit represented by the following Formula (2) or a repeating unit represented by the following Formula (3); and a repeating unit represented by the following Formula (1), a content of the repeating unit represented by Formula (1) being 20% by mass or more but less than 50% by mass with respect to a total amount of repeating units represented by Formulae (1) to (3).

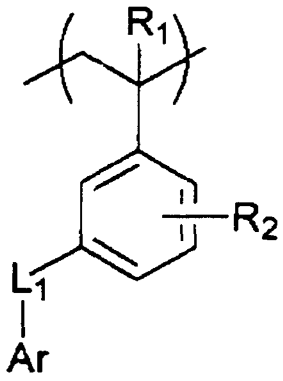

Formula (1)

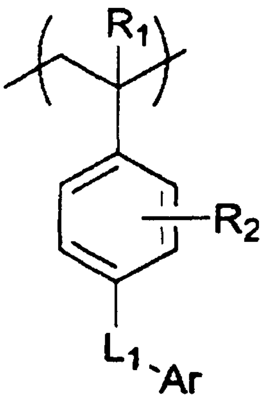

Formula (2)

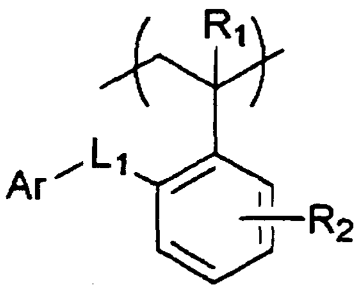

Formula (3)

In Formulae (1) to (3), $R_1$ represents a hydrogen atom or a methyl group; $R_2$ represents a hydrogen atom or a substituent; $L_1$ represents a single bond, or a divalent linkage group including at least one selected from the group consisting of an alkylene group having 1 to 12 carbon atoms, an alkenylene group having 2 to 12 carbon atoms, an oxyalkylene group having 2 to 6 carbon atoms, -CO-, -N($R_3$)-, -CON($R_3$)-, -COO-, -O-, -S-, - SO- and -$SO_2$-; $R_3$ represents a hydrogen atom or an alkyl group having 1 to 6 carbon atoms; Ar represents a monovalent group derived from: a condensed aromatic ring compound having 8 or more carbon atoms, a hetero ring compound condensed with (an) aromatic ring(s), or a compound containing two or more benzene rings linked to each other.

<2> The water-based pigment composition of the item <1>, wherein the content of the repeating unit represented by Formula (1) is 35% by mass or more but less than 50% by mass with respect to the total amount of the repeating units represented by Formulae (1) to (3).

<3> The water-based pigment composition of the item <1> or the item <2>, wherein Ar in Formulae (1) to (3) represents a monovalent group derived from naphthalene, biphenyl, triphenylmethane, phthalimide, acridone, fluorene, anthracene, phenanthrene, diphenylmethane, naphthalimide or carbazole.

<4> The water-based pigment composition of any one of the items <1> to <3>, wherein $L_1$ in Formulae (1) to (3) represents a divalent linkage group including at least one selected from the group consisting of an alkylene group having 1 to 6 carbon atoms, -CO-, -N($R_3$)- and -O-, and $R_3$ represents a hydrogen atom or an alkyl group having 1 to 6 carbon atoms.

<5> The water-based pigment composition of any one of the items <1> to <4>, wherein the ionic group is an anionic group.

<6> The water-based pigment composition of any one of the items <1> to <5>, wherein the ionic group is a carboxy group.

<7> The water-based pigment composition of any one of the items <1> to <6>, wherein a content of the repeating unit including an ionic group is 3% by mass to 20% by mass with respect to a total mass of the dispersant.

<8> The water-based pigment composition of any one of the items <1> to <7>, wherein the dispersant further comprises a repeating unit represented by the following Formula (4).

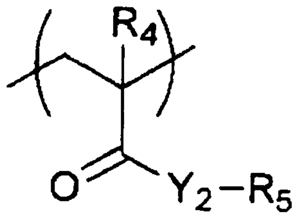

Formula (4)

In Formulae (4), $R_4$ represents a hydrogen atom or a methyl group; $Y_2$ represents an oxygen atom or -N($R_6$)-; $R_6$

represents a hydrogen atom or an alkyl group; and $R_5$ represents a straight chain or branched alky group having 1 to 20 carbon atoms, an alicyclic alky group having 1 to 20 carbon atoms, a phenyl group or a group derived from an ether compound of an alkyl group of oligoethylene glycol having 2 to 16 carbon atoms.
<9> The water-based pigment composition of the item <8>, wherein, in Formula (4), $Y_2$ represents an oxygen atom, -NH- or -N($CH_3$)-; and $R_5$ is a methyl group, an ethyl group, a propyl group, an isopropyl group or a phenoxyethyl group.
<10> The water-based pigment composition of the item <8> or the item <9>, wherein the content of the repeating unit represented by Formula (4) is 20% by mass to 95% by mass with respect to a total mass of the dispersant.
<11> A producing method of a water-based pigment dispersion including: obtaining a mixture by mixing the dispersant of any one of the items <1> to <10>, a pigment, an organic solvent capable of dissolving the dispersant, and water or a water-based carrier medium which contains water and at least one organic solvent; and removing at least a part of the organic solvent capable of dissolving the dispersant from the mixture.
<12> A water-based ink for inkjet recording, including a water-based pigment dispersion obtained by the producing method of a water-based pigment dispersion of the item <11>.

The present invention will be described in detail below.

[Water-based pigment composition]

The water-based pigment composition of the present invention contains at least one pigment at least one dispersant, and water, wherein the dispersant contains a repeating unit having an ionic group, a repeating unit represented by the following Formula (1), and at least one of a repeating unit represented by the following Formula (2) or a repeating unit represented by the following Formula (3), in which the content of the repeating unit represented by Formula (1) with respect to the total amount of repeating units represented by Formulae (1) to (3) is 20% by mass or more but less than 50% by mass.
The use of a dispersant with this configuration enables a water-based pigment composition excellent in stability over time, in which a pigment is finely dispersed to be obtained.

(Dispersant)

The dispersant in the present invention contains a copolymer containing at least one repeating unit represented by the following Formula (1), at least one repeating unit represented by at least either the following Formula (2) or the following Formula (3), and at least one repeating unit having an ionic group.
In the present invention, the content of the repeating unit represented by Formula (1) is 20% by mass or more but less than 50% by mass with respect to the total amount of the repeating units represented by Formulae (1) to (3). It is preferably 35% by mass but less than 50% by mass, and more preferably 35% by mass or more but less than 45% by mass. If the content of the repeating unit represented by Formula (1) is less than 20% by mass or 50% by mass or more, the stability over time of the water-based pigment composition may deteriorate.
In the present invention, the fact that the content of the meta-substituted isomer represented by Formula (1) among the similarly-structured repeating units represented by Formulae (1) to (3) that are different in substitution position is within the aforementioned specific range with respect to the total amount of the repeating units represented by any of Formulae (1) to (3) in the dispersant enables a dispersant excellent in stability over time that exhibits good pigment dispersibility to be constituted.
Although the copolymer contains a repeating unit represented by Formula (1) and at least one of a repeating unit represented by Formula (2) or a repeating unit represented by Formula (3), the copolymer may be either a copolymer that contains two kinds of repeating units, namely a repeating unit represented by Formula (1) and a repeating unit represented by Formula (2) or (3), or a copolymer that contains three kinds of repeating units, namely a repeating unit represented by Formula (1), a repeating unit represented by Formula (2), and a repeating unit represented by Formula (3). In the present invention, it is preferable, from the viewpoints of dispersibility and stability over time, that the copolymer be constituted with inclusion of a repeating unit represented by Formula (1) and at least a repeating unit represented by Formula (2).

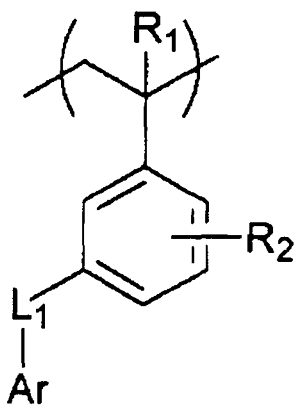

Formula (1)

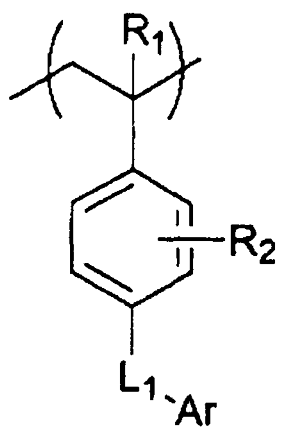

Formula (2)

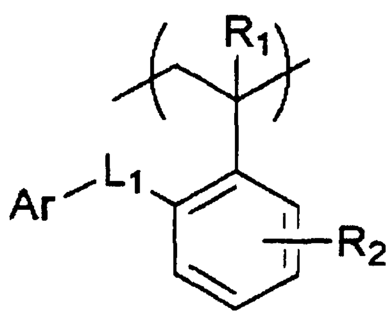

Formula (3)

In the formulae, $R_1$ represents a hydrogen atom or a methyl group, and $R_2$ represents a hydrogen atom or a substituent. $L_1$ represents a single bond, or a divalent linkage group including at least one selected from the group consisting of an alkylene group having 1 to 12 carbon atoms, an alkenylene group having 2 to 12 carbon atoms, an oxyalkylene group having 2 to 6 carbon atoms, -CO-, -N($R_3$)-, -CON($R_3$)-, -COO-, -O-, -S-, -SO- and -$SO_2$-, $R_3$ represents a hydrogen atom or an alkyl group having 1 to 6 carbon atoms, and Ar represents a monovalent group derived from: a condensed aromatic ring compound having 8 or more carbon atoms; a hetero ring compound condensed with (an) aromatic ring(s); or a compound containing two or more benzene rings linked to each other.
Although $R_1$, $R_2$, $L_1$ and Ar in Formulae (1) through (3) each may be either different or the same Formula by Formula, it is preferable that they be each the same.
In Formulae (1) to (3), $R_1$ represents independently for each occurrence a hydrogen atom or a methyl group, and it is preferably a hydrogen atom.
In Formulae (1) to (3), $L_1$ represents a single bond or a divalent linkage group composed of at least one selected from the following group of linkage groups. When $L_1$ is composed of two or more linkage groups selected from the following group of linkage groups, the respective linkage groups selected from the group of linkage groups may be either the same as or different from one another. $L_1$s in Formulae (1) to (3) may be the same as or different from one another.

Group of linkage groups

Alkylene groups having 1 to 12 carbon atoms, alkenylene groups having 2 to 12 carbon atoms, -CO-, -N($R_3$)- ($R_3$ is a hydrogen atom or an alkyl group having 1 to 6 carbon atoms), -O-, -S-, -SO-, and -$SO_2$-.
Although the alkylene groups have 1 to 12 carbon atoms, alkylene groups having 1 to 6 carbon atoms are preferred. Although the alkenylene groups have 2 to 12 carbon atoms, alkenylene groups having 2 to 4 carbon atoms are preferred. The alkylene groupa and the alkenylene groups may, if possible, be each independently substituted by a substituent (including alkyl groups having 1 to 6 carbon atoms, halogen atoms, a cyano group, and alkoxy groups having 1 to 6 carbon atoms).
In the present invention, the aforementioned $L_1$ is preferably, from the viewpoint of dispersion stability, a divalent linkage group composed of at least one selected from the group consisting of alkylene groups having 1 to 6 carbon atoms, -CO-, - N ($R_3$) -, - CON ($R_3$)- ($R_3$ is a hydrogen atom or an alkyl group having 1 to 6 carbon atoms), and- O-, and more preferably a divalent linkage group composed at least one selected from the group consisting of alkylene groups having 1 to 4 carbon atoms, -CO-, - NH-, and- O- .
While $R_2$ in Formulae (1) to (3) represents independently for each occurrence a hydrogen atom or a substituent, $R_2$ is preferably a hydrogen atom, an alkyl group, an alkyloxy group, or a halogen atom, and more preferably a hydrogen atom or a halogen atom.
Ar in Formulae (1) to (3) represents independently for each occurrence a monovalent group derived from a condensed aromatic ring compound having 8 or more carbon atoms, a hetero ring compound condensed with (an) aromatic ring(s), or a compound containing two or more benzene rings linked to each other.
The aforementioned condensed aromatic ring compound having 8 or more carbon atoms is an aromatic compound having 8 or more carbon atoms composed of an aromatic ring in which at least two benzene rings have been condensed and/or at least one aromatic ring and an alicyclic hydrocarbon condensed to the aromatic ring. Specific examples include

naphthalene, anthracene, fluorene, phenanthrene, and acenaphthene.

The aforementioned hetero ring compound condensed with (an) aromatic ring(s) is a compound in which at least an aromatic compound containing no heteroatom (preferably, a benzene ring) and a cyclic compound having a heteroatom have been condensed. The cyclic compound having a heteroatom is preferably a five-membered ring or a six-membered ring. The heteroatom is preferably a nitrogen atom, an oxygen atom, or a sulfur atom. The cyclic compound having a heteroatom may have two or more heteroatoms, and in this case, the heteroatoms may be the same as or different from one another. Specific examples of the hetero ring compound condensed with (an) aromatic ring(s) include phthalimide, naphthalimide, acridone, carbazole, benzoxazol, and benzothiazole.

The aforementioned compound containing two or more benzene rings linked to each other means a compound containing two or more benzene ring which are linked to one another via a single bond, a divalent linkage group, or a trivalent linkage group. The divalent linkage group is preferably a divalent linkage group selected from the group consisting of alkylene groups having 1 to 4 carbon atoms, -CO-, -O-, -S-, -SO-, $-SO_2-$, and a combination of them. The trivalent linkage group may be a methine group.

The respective benzene rings may be linked via plural linkage groups, and the linkage groups may be the same as or different from one another. The number of benzene rings is preferably from two to six, and more preferably two or three. Specific examples of the compound containing two or more benzene rings linked to each other include biphenyl, triphenylmethane, diphenylmethane, diphenyl ether, and diphenylsulfone.

From the viewpoints of the dispersibility and the stability over time of a pigment, Ar in Formulae (1) to (3) is preferably a monovalent group derived from naphthalene, biphenyl, triphenylmethane, phthalimide, naphthalimide, acridone, fluorene, anthracene, phenanthrene, diphenylmethane, or carbazole, and more preferably a monovalent group derived from naphthalene, biphenyl, phthalimide, naphthalimide, or acridone.

For example, a monovalent group derived from naphthalene means a monovalent group resulting from removal of one hydrogen atom from naphthalene, and the position where a hydrogen atom is removed is not particularly restricted.

The aforementioned Ar may have a substituent. Examples of the substituent include monovalent substituents, such as alkyl groups, alkoxy groups, alkylcarbonyl groups, alkylcarbonyloxy groups, alkyloxycarbonyloxy groups, halogen groups, and a cyano group, and divalent substituents, such as an oxo group. Preferable substituents include alkyl groups having 1 to 10 carbon atoms, alkoxy groups having 1 to 10 carbon atoms, alkylcarbonyl groups having 1 to 10 carbon atoms, alkylcarbonyloxy groups having 1 to 10 carbon atoms, a chloro group, a cyano group, and an oxo group.

Specific examples of Ar having a divalent substituent among such substituents include anthraquinone and naphthoquinone.

Moreover, these substituents may be substituted by other substituents, and preferable substituents in this case are also the same in meaning as those described above. When Ar has two or more substituents, the respective substituents may be either the same or different from each other. If possible, substituents may be linked to each other to form a ring.

With regard to the repeating unit represented by any of Formulae (1) to (3) in the present invention, it is preferable from the viewpoint of dispersion stability that $L_1$ be a divalent linkage group composed of at least one selected from the group consisting of alkylene groups having 1 to 6 carbon atoms, -CO-, - $N(R_3)$- (R3 is a hydrogen atom or an alkyl group having 1 to 6 carbon atoms), and -O-, $R_2$ be a hydrogen atom, an alkyl group, an alkyloxy group, or a halogen atom, and Ar be a monovalent group derived from naphthalene, biphenyl, triphenylmethane, phthalimide, naphthalimide, acridone, fluorene, anthracene, phenanthrene, diphenylmethane, or carbazole. Moreover, it is more preferable that $L_1$ be a divalent linkage group composed of at least one selected from the group consisting of alkylene groups having 1 to 4 carbon atoms, -CO-, - NH-, and -O-, $R_2$ be a hydrogen atom or a halogen atom, and Ar be a monovalent group derived from naphthalene, biphenyl, phthalimide, naphthalimide, or acridone.

While the repeating unit represented by any of Formulae (1) to (3) that the copolymer in the present invention contains may be formed by obtaining a copolymer and then introducing a corresponding functional group through a polymeric reaction, it is preferably formed by copolymerizing a monomer represented by any of respectively corresponding Formulae (5) to (7) as a copolymerizable component.

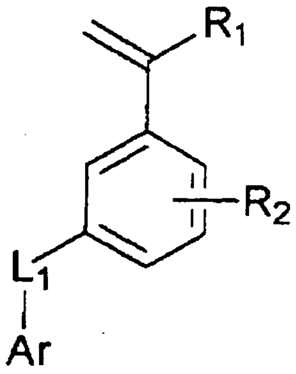

Formula (5)

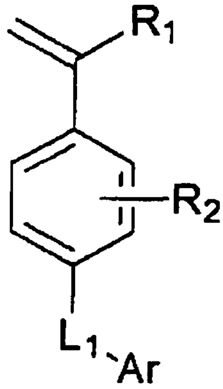

Formula (6)

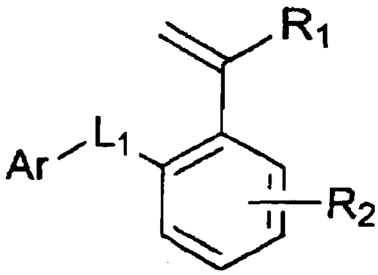

Formula (7)

$R_1$, $R_2$, $L_1$, and Ar in Formulae (5), (6) and Formula (7) are respectively the same in meaning as $R_1$, $R_2$, $L_1$, and Ar in respectively corresponding Formulae (1), (2) and (3), and their preferable examples are also the same.
The monomer represented by any of Formulae (5) to (7) may be used singly or two or more of such monomers may be used in combination.
Specific examples of the monomer represented by any of Formulae (5) to (7) are shown below, but the present invention is not restricted to the following examples. While the specific examples of the monomer shown below are shown in a form in which the substitution position is not shown clearly, examples with meta substitution position correspond to monomers represented by Formula (5), examples with para substitution position correspond to monomers represented by Formula (6), and examples with ortho substitution position correspond to monomers represented by Formula (7) .

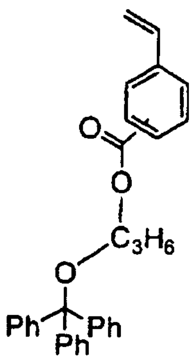

M-1

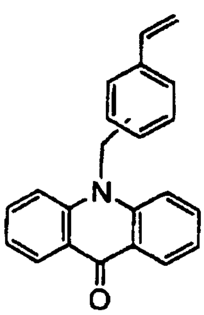

M-2

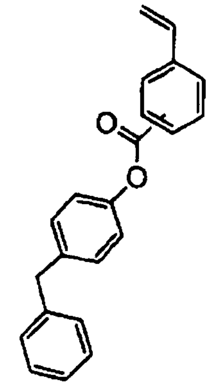

M-3

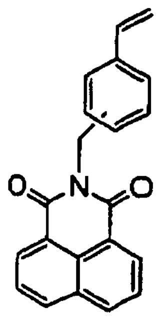

M-4

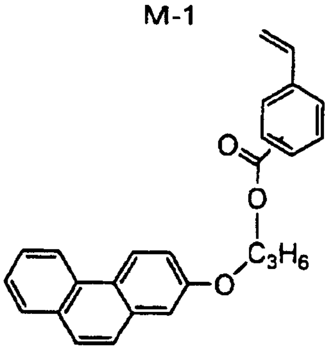

M-5

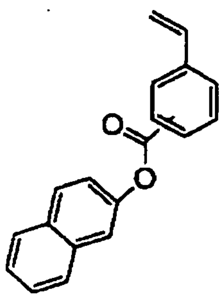

M-6

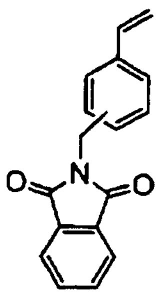

M-7

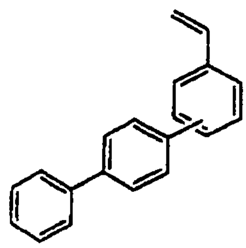

M-8

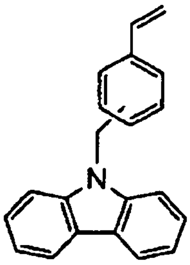

M-9

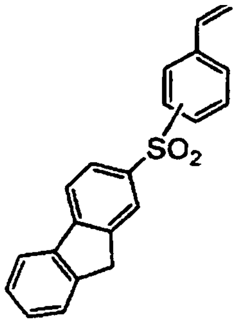

M-10

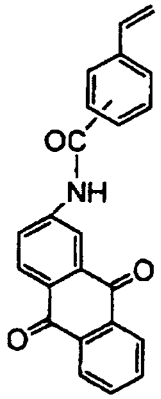

M-11

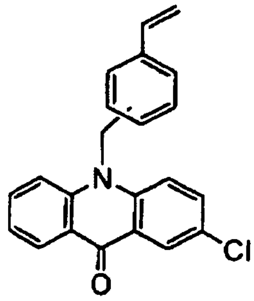

M-12

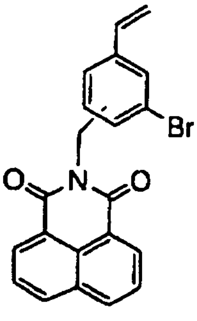

M-13

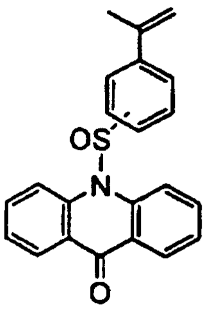

M-14

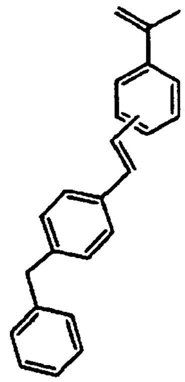

M-15

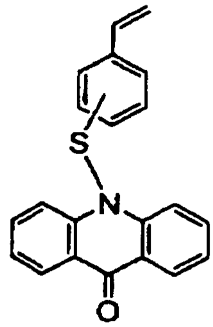

M-16

While the total amount (total content) of the repeating units represented by Formulae (1) to (3) in the dispersant is not particularly limited, it is preferably 2% by mass to 95% by mass, more preferably 5% by mass to 50% by mass, and even more preferably 5% by mass to 40% by mass with respect to a total mass of the dispersant from the viewpoints of dispersibility and stability over time.

Moreover, from the viewpoints of dispersibility and stability over time, it is preferable that the total amount of the repeating units represented by Formulae (1) to (3) (which may referred to as "total amount of the specific repeating units" herein) be 5% by mass to 50% by mass and the content of the repeating unit represented by Formula (1) with respect to the total amount of the specific repeating units (which may be referred to as "meta isomer ratio" herein) be 35% by mass or more but less than 50% by mass, and it is more preferable that the total amount of the specific repeating units be 5% by mass to 40% by mass and the meta isomer ratio be 35% by mass or more but less than 45% by mass.

The copolymer in the present invention contains at least one repeating unit having an ionic group as a copolymerized unit. The aforementioned ionic group may be either an anionic group or a cationic group.

Examples of the anionic group include a carboxy group, a sulfonic acid group, and a phosphoric acid group. Examples of the cationic group include a tertiary amino group and a quaternary ammonium group.

In the present invention, the ionic group is preferably an anionic group, and more preferably a carboxy group from the viewpoints of dispersibility and stability of the pigment.

In the present invention, the repeating unit having an ionic group may be formed, for example, by introducing an ionic group through a polymeric reaction into a copolymer containing no ionic group, or by copolymerizing a monomer having an ionic group as a copolymerizable component.

Examples of the monomer having an ionic group include anionic group-containing monomers and cationic group-containing monomers.

The cationic group- containing monomers may be any compounds containing at least one cationic group and at least one polymerizable group without any particular restriction. Specific examples include unsaturated tertiary amino group- containing vinyl monomers and unsaturated ammonium salt- containing vinyl monomers.

The unsaturated tertiary amino group- containing vinyl monomers specifically include N, N- dimethylaminoethyl (meth) acrylate, N, N- dimethylaminopropyl (meth) acrylate, N, N- diethylaminoethyl (meth) acrylate, N, N- dimethylaminopropyl

(meth) acrylamide, vinyl pyrrolidone, 2- vinylpyridine, 4- vinylpyridine, 2- methyl- 6- vinylpyridine, and 5- ethyl- 2- vinylpyridine.
Examples of the unsaturated ammonium salt- containing vinyl monomers include quaternized N, N- dimethylaminoethyl (meth) acrylate, quaternized N, N- diethylaminoethyl (meth) acrylate, and quaternized N, N- dimethylaminopropyl (meth) acrylate.

The anionic group- containing monomers may be any compounds containing at least one anionic group and at least one polymerizable group without any particular restriction. Examples thereof include unsaturated carboxylic acid monomers, unsaturated sulfonic acid monomers, and unsaturated phosphoric acid monomers.
The unsaturated carboxylic acid monomers include acrylic acid, methacrylic acid, crotonic acid, itaconic acid, maleic acid, fumaric acid, citraconic acid, and 2- methacryloyloxymethylsuccinic acid.
The unsaturated sulfonic acid monomers include styrenesulfonic acid, 2- acrylamido- 2- methylpropanesulfonic acid, 3- sulfopropyl (meth) acrylate, and bis (3- sulfopropyl) itaconate.
The unsaturated phosphoric acid monomers include vinylphosphonic acid, vinyl phosphate, bis (methacryloxyethyl) phosphate, diphenyl- 2- acryloyloxyethyl phosphate, diphenyl- 2- methacryloxyethyl phosphate, and dibutyl- 2- acryloyloxyethyl phosphate.

The monomers having an ionic group in the present invention are preferably monomers having an anionic group, and more preferably monomers having a carboxy group from the viewpoints of dispersibility and stability of a pigment at the time of constituting a water-based pigment dispersion.
The monomers having an ionic group may be used singly or two or more of them may be used in combination.

While the content of the repeating unit containing an ionic group that the dispersant in the invention contains is not particularly limited, it is preferably 3% by mass to 20% by mass, more preferably 5% by mass to 18% by mass, and even more preferably 5% by mass to 15% by mass with respect to a total mass of the dispersant from the viewpoint of dispersion stability.
Moreover, in the present invention, it is preferable from the viewpoints of dispersibility and stability that the dispersant contain 3% by mass to 20% by mass of a repeating unit containing an anionic group as an ionic group, and it is more preferable that the dispersant contain 5% by mass to 18% by mass of a repeating unit containing a carboxy group.

It is preferable for the dispersant in the present invention that the mole ratio of the repeating unit having an ionic group to total of the repeating units represented by Formulae (1) to (3) be 0.1 to 3, more preferably 0.3 to 2 from the viewpoints of dispersibility and stability.

While the dispersant in the present invention contains a repeating unit represented by Formula (1), at least one of a repeating unit represented by Formula (2) or a repeating unit represented by Formula (3) and a repeating unit having an ionic group, it is preferably a copolymer that further contains a repeating unit represented by the following Formula (4).

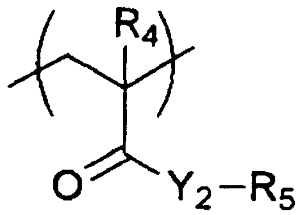

Formula (4)

In Formula (4), $R_4$ represents a hydrogen atom or a methyl group.
$Y_2$ represents an oxygen atom or $-N(R_6)-$. $R_6$ represents a hydrogen atom or an alkyl group. Preferably, $Y_2$ is an oxygen atom, -NH-, or $-N(CH_3)-$, and more preferably, it is an oxygen atom.

In Formula (4), $R_5$ represents a straight chain or branched or alicyclic alkyl group having 1 to 20 carbon atoms, a phenyl group, or a group derived from an alkyl ether compound of oligoethylene glycol having 2 to 16 carbon atoms. The straight chain or branched or alicyclic alkyl group having 1 to 20 carbon atoms may be unsubstituted or may have a substituent. Examples of the substituent include a phenyl group, a phenoxy group, alkoxy groups having 1 to 4 carbon atoms, a halogen group, and a cyano group.

Specific examples of unsubstituted alkyl groups among the straight chain or branched or alicyclic alkyl having 1 to 20 carbon atoms include a methyl group, an ethyl group, a n-butyl group, a n-hexyl group, a lauryl group, a stearyl group, an iso-butyl group, a tert-butyl group, a 2-ethylhexyl group, an isobornyl group, and a cyclohexyl group. In the present invention, the number of carbon atoms is preferably 1 to 18, and more preferably the number of carbon atoms

is 1 to 12 from the viewpoints of dispersibility and stability.

The group derived from an alkyl ether compound of oligoethylene glycol having 2 to 16 carbon atoms means a group represented by Formula: $-(CH_2CH_2O)$ n-$R_7$, wherein n represents an integer of 1 to 8, and $R_7$ represents an alkyl group having 1 to 6 carbon atoms.

In particular, it is preferable that n be 1 to 7 and $R_7$ have 1 to 4 carbon atoms, and it is more preferable that n be 1 to 4 and $R_7$ have 1 to 3 carbon atoms.

$R_5$ is preferably a straight chain or branched or alicyclic alkyl group having 1 to 18 carbon atoms or a group derived from an alkyl ether compound of oligoethylene glycol having 2 to 16 carbon atoms from the viewpoints of dispersibility and stability, and it is more preferably a unsubstituted straight chain or branched alky having 1 to 12 carbon atoms, a benzyl group, or a group derived from an ether compound of alkyl group with oligoethylene glycol having 2 to 16 carbon atoms.

It is preferable for the repeating unit represented by Formula (4) in the present invention, from the viewpoints of dispersibility and stability, that $Y_2$ be an oxygen atom, - NH-, or -N($CH_3$)- and $R_5$ be a methyl group, an ethyl group, a propyl group, an isopropyl group, or a phenoxyethyl group, and it is more preferable that $Y_2$ be an oxygen atom and $R_5$ be a methyl group or an ethyl group.

The repeating unit represented by Formula (4) can be formed by copolymerizing a monomer represented by corresponding Formula (8) as a copolymerizable component.

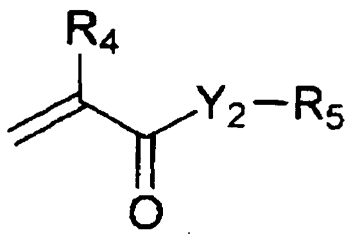

Formula (8)

In Formula (8), $R_4$, $Y_2$, and $R_5$ are the same in meaning respectively as $R_4$, $Y_2$ and $R_5$ in corresponding Formula (4), and their preferable examples are also the same. The monomers represented by Formula (8) may be used singly or two or more of them may be used in combination.

Specific examples of the monomers represented by Formula (8) include the following monomers: unsubstituted alkyl (meth) acrylates, such as methyl (meth) acrylate, ethyl (meth) acrylate, n- butyl (meth) acrylate, iso- butyl (meth) acrylate, tert- butyl (meth) acrylate, 2- ethylhexyl (meth) acrylate, isobornyl (meth) acrylate, and cyclohexyl (meth) acrylate; alkyl (meth) acrylates having a substituent, such as benzyl (meth) acrylate, phenoxyethyl (meth) acrylate, and methoxyethyl (meth) acrylate; phenyl (meth) acrylate; and (meth) acrylates having a group derived from an alkyl ether compound of origoethylene glycol, such as methoxyethoxyethyl (meth) acrylate.

In the case where the dispersant in the present invention contains a repeating unit represented by Formula (4), the content thereof is preferably 20% by mass to 95% by mass, more preferably 32% by mass to 90% by mass, and even more preferably 45% by mass to 90% by mass with respect to a total mass of the dispersant from the viewpoints of dispersibility and stability.

Moreover, it is preferable that $Y_2$ in Formula (4) be an oxygen atom, -NH-, or - N($CH_3$)-, $R_5$ be a methyl group, an ethyl group, a propyl group, an isopropyl group, or a phenoxyethyl group, and the content of the repeating unit represented by Formula (4) be 20% by mass to 95% by mass, and it is more preferable that $Y_2$ be an oxygen atom, $R_5$ be a methyl group or an ethyl group, and the content of the repeating unit represented by Formula (4) be 32% by mass to 90% by mass.

While the dispersant in the present invention is constituted by containing a repeating unit represented by Formula (1), at least one of a repeating unit represented by Formula (2) or a repeating unit represented by Formula (3), and a repeating unit having an ionic group and, as required, containing a repeating unit represented by Formula (4), the dispersant may further contain an additional repeating unit different from these repeating units. The additional repeating unit can be formed, for example, by copolymerizing a corresponding monomer as a copolymerizable component.

While the copolymerizable component that forms the additional repeating unit may be any known monomer without any particular restriction as far as the monomer has a functional group that can form a polymer, vinyl monomers are preferable from the viewpoints of availability, handability, and versatility. As such monomers, monomers described in Polymer Handbook 2nd ed., J. Brandrup, Wiley Interscience (1975), chapter 2, pages 1- 483 can be used.

Examples include compounds having one addition- polymerizable unsaturated bond selected from among (meth) acrylates having a nonionic group, diesters of unsaturated polyhydric carboxylic acid, styrene and derivatives thereof, (meth) acrylamides, unsaturated nitriles, allyl compounds, vinyl ethers, and vinyl esters.

When the dispersant in the present invention further contains a hydrophilic repeating unit having a nonionic group in addition to a repeating unit having an ionic group, the content of the hydrophilic repeating unit is preferably 20% by mass or less, and more preferably 15% by mass or less, with respect to the total mass of the dispersant.

The content in the above range is preferable from the viewpoints that the orientation to the pigment is improved and the dissolution of the dispersant in water is inhibited and the pigment is covered with the dispersant more effectively and, as a result, it becomes easier to obtain a pigment composition having a smaller particle diameter and being excellent in stability over time.

While the dispersant in the present invention may be a three-component copolymer that contains a repeating unit represented by Formula (1), a repeating unit represented by Formula (2) or Formula (3), and a repeating unit having an ionic group, it is preferably a four-component copolymer that contains a repeating unit represented by Formula (1), a repeating unit represented by Formula (2) or Formula (3), a repeating unit having an ionic group, and a repeating unit represented by Formula (4). When the dispersant is a copolymer of such constitution, the solubility of the dispersant in various organic solvents can be increased moderately and it becomes easier to obtain a stable pigment dispersion.

The dispersant in the invention may be a random copolymer in which respective structural units have been introduced randomly or a block copolymer in which respective structural units have been introduced regularly. When the dispersant is a block copolymer, the order of introducing the respective structural units during the synthesis of the block polymer is not limited; further, the same structural unit may be used twice or more during the synthesis of the block copolymer. The dispersant is preferably a random copolymer in consideration of the easiness of production.

The weight- average molecular weight (Mw) of the dispersant used in the invention is preferably 10, 000 to 200, 000, more preferably 15, 000 to 150, 000 and further preferably 20, 000 to 100, 000 from the viewpoint of dispersibility and dispersion stability of the pigment.

The weight- average molecular weight in the above range is preferable from the viewpoint that steric repulsion effect thereof as a dispersant tends to become favorable, and steric effect offers a tendency of taking less time for adsorption to the pigment.

The molecular- weight distribution (denoted by weight- average molecular weight value (Mw) / number- average molecular weight value (Mn) ) of the dispersant used in the invention is preferably in the range of from 1 to 6, and is more preferably in the range of from 1 to 4.

The molecular- weight distribution in the above range is preferable from the viewpoint of shortening of time to disperse the pigment and stability of dispersion over time. Here, the number- average molecular weight (Mn) and the weight-average molecular weight (Mw) are molecular weights converted by using polystyrene as a standard reference material, and detected by using solvent THF and a differential refractometer through GPC analysis device with the use of a column of TSKgel GMHxL, TSKgel G4000HxL and/or TSKGEL G2000HxL (trade names, all manufactured by Tosoh Corp.) .

The dispersant used in the invention may be synthesized by various polymerization methods such as solution polymerization, precipitation polymerization, suspension polymerization, block polymerization or emulsion polymerization. Polymerization reaction may be performed by a known operation such as a batch, semicontinuous or continuous operation.

Examples of a method for starting polymerization include a method using a radical initiator and a method including irradiating light or radioactive rays. These polymerization methods and methods for starting polymerization are described, for example, in "Polymer Synthesis Method" revised edition written by Teiji Tsuruta (published by The Nikkan Kogyo Shimbun, Ltd., 1971) and "Experimental Method of Polymer Synthesis" written by Takayuki Ohtsu and Masayoshi Kinoshita, published by Kagaku-Dojin Publishing Company, Inc., in 1972, pages 124 to 154.

A solution polymerization method using a radical initiator is particularly preferable among the above polymerization methods. The solvent used in the solution polymerization method may be one, a mixture of two kinds or more, or mixture solvent with water, of various organic solvents such as ethyl acetate, butyl acetate, acetone, methyl ethyl ketone, methyl isobutyl ketone, cyclohexanone, tetrahydrofuran, dioxane, N, N- dimethylformamide, N, N- dimethylacetamide, benzene, toluene, acetonitrile, methylene chloride, chloroform, dichloroethane, methanol, ethanol, 1- propanol, 2- propanol or 1- butanol.

A temperature for polymerization to form the dispersant is determined in relation to the molecular weight of the dispersant to be produced and the kind of the initiator, while it is typically approximately 0°C to 100°C, and is preferably in a range of 50°C to 100°C.

A reaction pressure for polymerization to form the dispersant may be properly selected, while it is typically 1 $kg/cm^2$ to 100 $kg/cm^2$, and is particularly preferably approximately 1 $kg/cm^2$ to 30 $kg/cm^2$. A reaction time for polymerization to form the dispersant may be approximately 5 hours to 30 hours. The obtained dispersant may be refined by reprecipitation or the like.

Specific examples of the dispersant which are preferable in the invention are shown below, while the scope of

the invention is not limited thereto. A content of each repeating unit is denoted by parts by mass. An each content ratio of repeating unit represented by Formulae (1) to (3) is shown as [o: m: p] respectively.

B-1

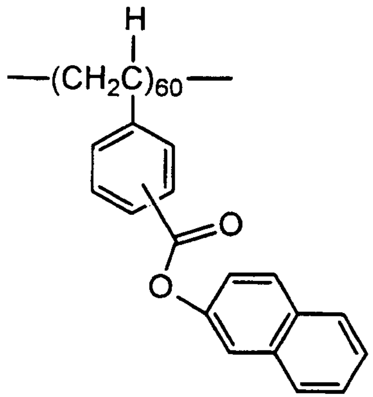

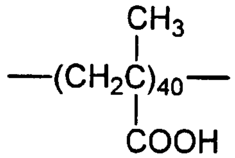

| Mw | Mw/Mn | o:m:p |
|---|---|---|
| 25400 | 2.56 | 15:45:40 |

B-2

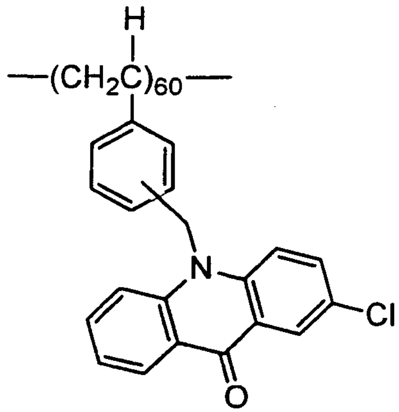

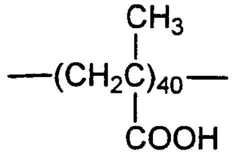

| Mw | Mw/Mn | o:m:p |
|---|---|---|
| 35200 | 2.21 | 2:28:70 |

(continued)

B-3

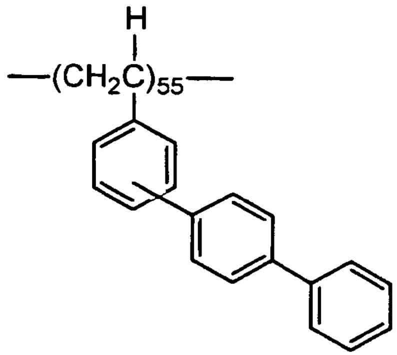

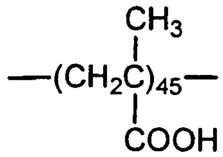

| Mw | Mw/Mn | o:m:p |
|---|---|---|
| 107400 | 1.95 | 60:40:0 |

B-4

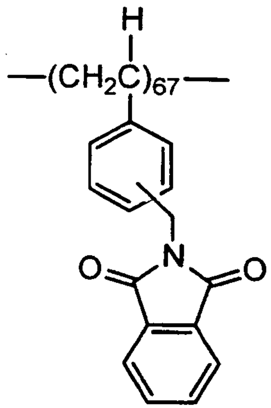

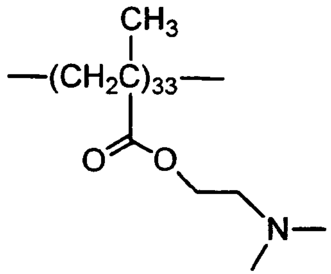

| Mw | Mw/Mn | o:m:p |
|---|---|---|
| 23000 | 2.33 | 0:35:65 |

(continued)

B-5

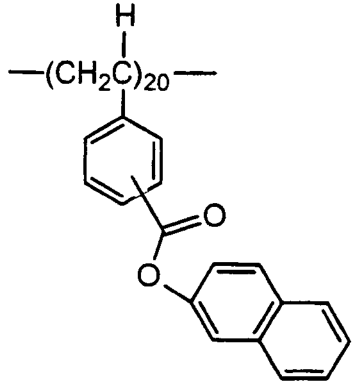

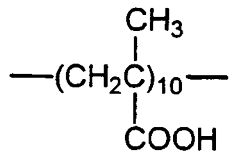

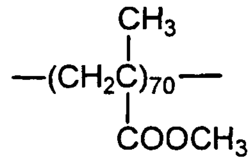

| **Mw** | **Mw/Mn** | **o:m:p** |
|---|---|---|
| 67500 | 2.67 | 2:40:58 |

B-6

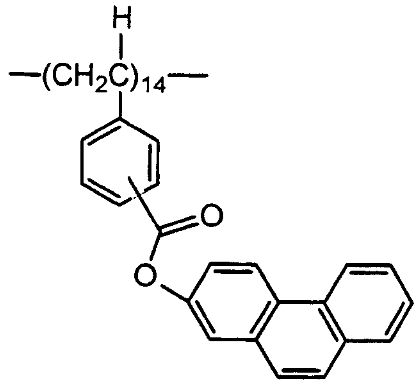

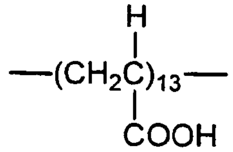

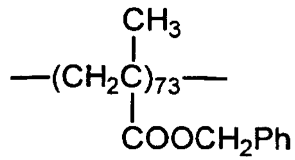

| **Mw** | **Mw/Mn** | **o:m:p** |
|---|---|---|
| 52500 | 1.99 | 2:40:58 |

(continued)

B-7

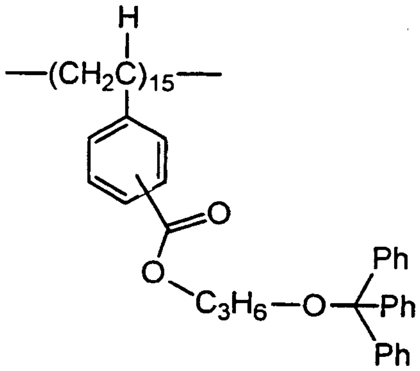

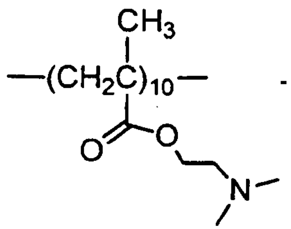

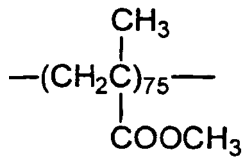

| Mw | Mw/Mn | o:m:p |
|---|---|---|
| 53800 | 2.32 | 0:25:75 |

B-8

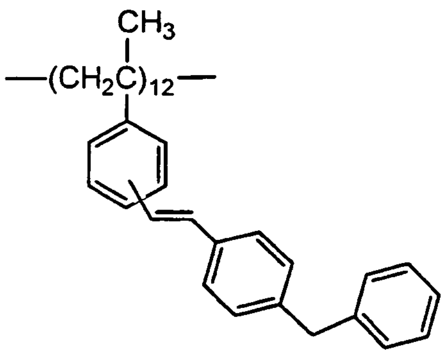

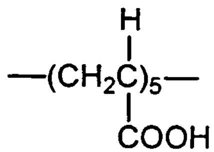

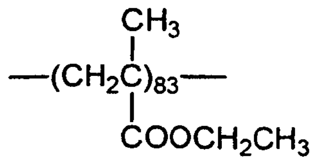

| Mw | Mw/Mn | o:m:p |
|---|---|---|
| 36200 | 1.84 | 55:45:0 |

(continued)

B-9

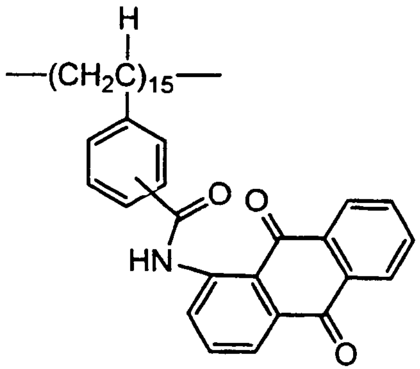

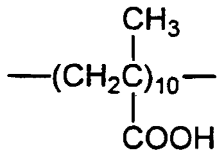

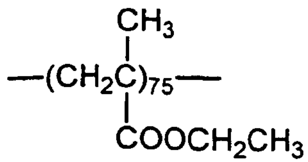

| Mw | Mw/Mn | o:m:p |
|---|---|---|
| 40500 | 2.51 | 0:30:70 |

(continued)

| | | | | Mw | Mw/Mn | o:m:p |
|---|---|---|---|---|---|---|
| B-10 | 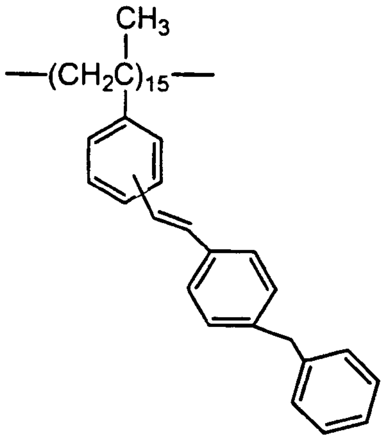 | 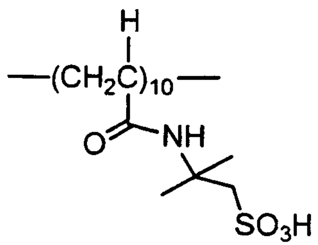 | 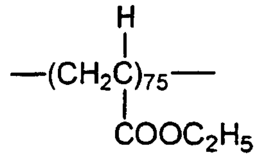 | 35600 | 2.67 | 30:43:27 |
| B-11 | 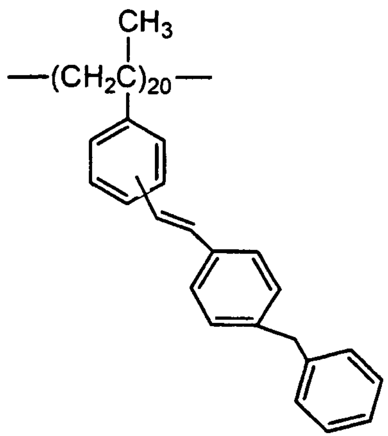 | 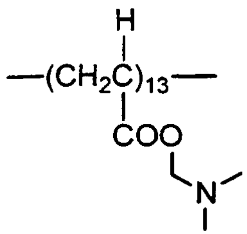 | 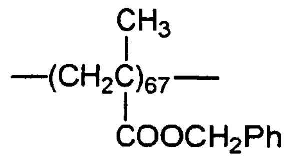 | 22500 | 2.33 | 10:45:45 |

(continued)

| | | | | Mw | Mw/Mn | o:m:p |
|---|---|---|---|---|---|---|
| B-12 | 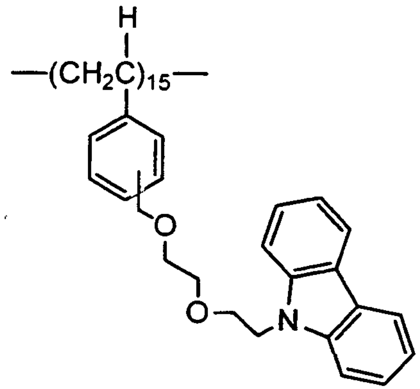 | 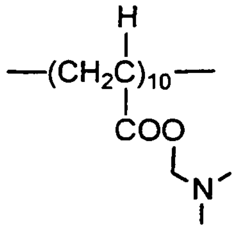 | 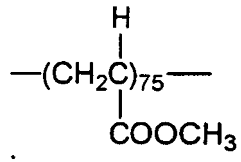 | 33900 | 1.96 | 2:30:68 |
| B-13 | 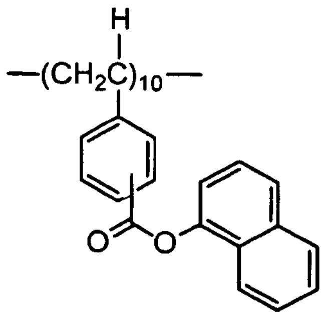 | 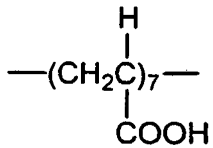 | 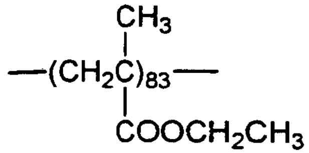 | 47600 | 2.48 | 2:28:70 |
| B-14 | 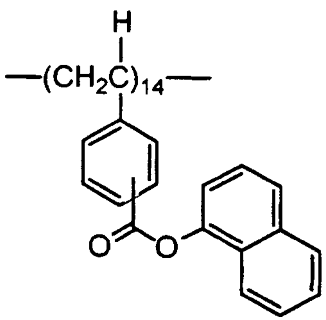 | 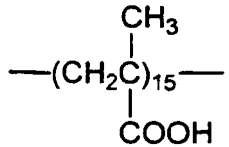 | 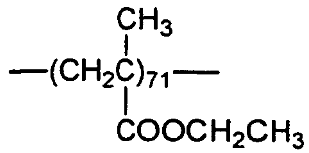 | 20000 | 2.31 | 0:32:68 |

(continued)

B-15

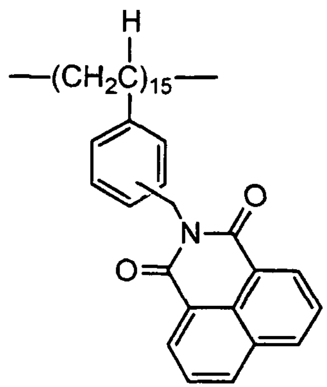

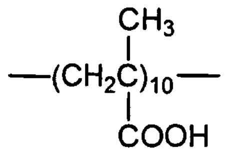

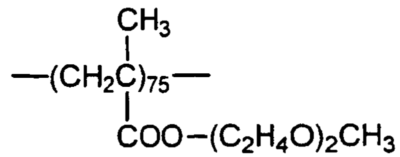

| Mw | Mw/Mn | o:m:p |
|---|---|---|
| 45000 | 2.31 | 2:43:55 |

B-16

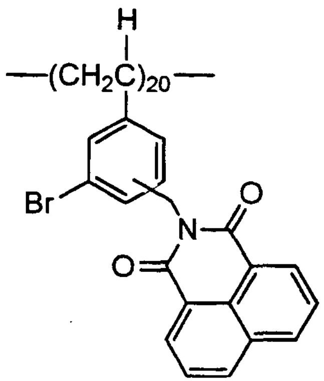

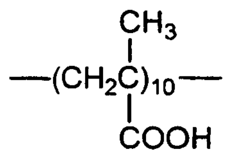

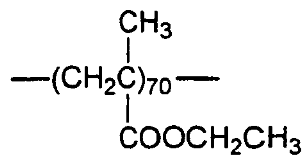

| Mw | Mw/Mn | o:m:p |
|---|---|---|
| 23600 | 2.44 | 2:43:55 |

(continued)

B-17

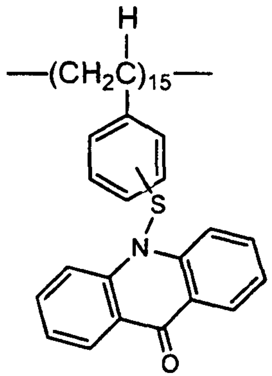

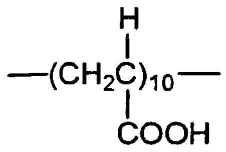

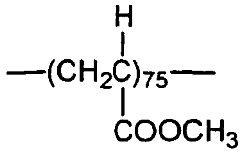

| Mw | Mw/Mn | o:m:p |
|---|---|---|
| 47800 | 2.50 | 15:40:45 |

B-18

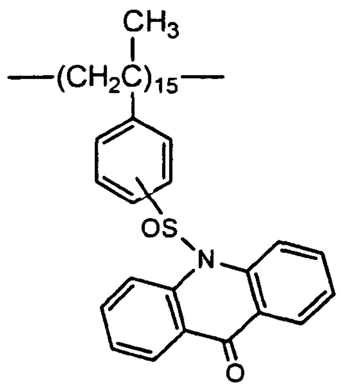

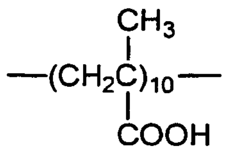

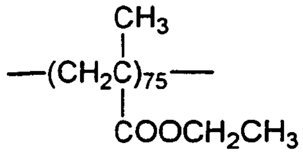

| Mw | Mw/Mn | o:m:p |
|---|---|---|
| 29600 | 2.22 | 0:42:58 |

B-19

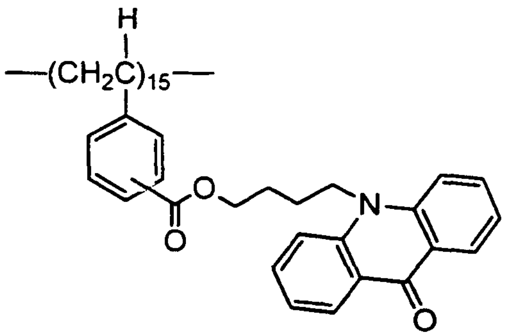

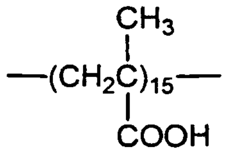

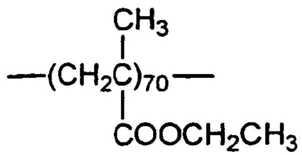

| Mw | Mw/Mn | o:m:p |
|---|---|---|
| 23100 | 2.47 | 0:35:65 |

The content of the dispersant in the water-based pigment composition of the invention is preferably 5% to 200% by mass, more preferably 10% to 100% by mass and particularly preferably 20% to 80% by mass with respect to the content of the pigment from the viewpoint of pigment dispersibility, ink colorability and dispersion stability of the pigment composition.
The content of the dispersant in the water-based pigment composition in the above range is preferable for the reason that the pigment may be covered with a proper amount of the dispersant to bring a tendency to easily obtain a water-based pigment composition having small particle diameter and excellent stability over time.
Moreover, from the viewpoints of dispersibility and stability over time, the water- based pigment composition of the present invention preferably contains a dispersant containing 3% by mass to 20% by mass of a repeating unit containing an anionic group and 5% by mass to 50% by mass of the specific repeating unit and having a meta isomer content of 35% by mass or more but less than 50% by mass in an amount of 10% by mass to 100% by mass with respect to the pigment, and more preferably contains a dispersant containing 5% by mass to 18% by mass of a repeating unit containing a carboxy group and 5% by mass to 40% by mass of the specific repeating unit and having a meta isomer content of 35% by mass or more but less than 45% by mass in an amount of 20% by mass to 80% by mass with respect to the pigment.
The water-based pigment composition of the present invention may, as required, contain a dispersant other than the aforementioned dispersant in addition to the aforementioned dispersant. The dispersant other than the aforementioned dispersant may be used within the range of the content of the aforementioned dispersant in the present invention. As the dispersant other than the above-mentioned dispersant, conventionally known water-soluble low molecular weight dispersants, water-soluble polymers, and so on may be used.

(Pigment)

The water-based pigment composition of the present invention contains at least one pigment.
As the pigment in the present invention, any known pigment can be used without any particular restriction. There is no particular restriction on the kind thereof, and conventionally known organic pigments and inorganic pigments may be used. Examples of pigments which may be used include organic pigments such as polycyclic pigments, such as azo lake pigments, azo pigments, phthalocyanine pigments, perylene and perinone pigments, anthraquinone pigments, quinacridone pigments, dioxazine pigments, diketopyrrolopyrrole pigments, thioindigo pigments, isoindolinone pigments, and quinophthalone pigments; dye lakes, such as basic dye lakes and acid dye lakes; nitro pigment; nitroso pigments; aniline black; and daylight fluorescent pigments; and inorganic pigments, such as titanium oxide, iron oxides and carbon blacks. Any pigments that are not contained in the Color Index may be used if they can be dispersed in an aqueous phase. Furthermore, of course, the pigments that have been surface-treated with a surfactant, a polymer dispersant, or the like, and graft carbon, and so on also can be used.
Among the aforementioned pigments, it is preferable to use organic pigments and carbon black-based pigments from the viewpoints of ink colorability, light resistance, weather resistance, and water resistance. As to the pigments, a pigment may be used singly or two or more pigments may be used in combination.
Specific examples of the organic pigments to be used for the present invention include the pigments described in paragraphs [0142] to [0145] of JP-A No. 2007-100071.

(Water-based medium)

The water-based pigment composition of the present invention preferably contains an water-based medium in addition to the pigment and the dispersant. Examples of the water-based medium include water and a mixed solvent of water and an organic solvent. When being used for a water-based pigment dispersion described later, the water-based medium is preferably a mixed solvent of water and an organic solvent.
The organic solvent may be selected from among conventionally known ones without any restrictions. For example, it is preferable to use ketones, acetates, or alcohols, and ketones are more preferable. Organic solvents may be used singly or two or more of them may be used in combination.
The content of the organic solvent in the water-based pigment composition is typically 10 parts to 1,000 parts by mass, and is preferably 20 parts to 500 parts by mass, with respect to 100 parts by mass of the pigment.
It is preferable that the content is set to 10 parts by mass or more since it may enable to easily prevent increase in viscosity of the composition, and it is preferable that the content is set to 1,000 parts by mass or less since it may enable to easily secure space for storage of the composition.

(Other additives)

Other known additives such as an acidic or basic neutralizer, a surfactant or the like may be added to the water-based pigment composition of the invention as required.

(Preparation of water-based pigment composition)

Examples of a method for preparing the water-based pigment composition of the invention include a method including dispersing a mixture containing the pigment, the dispersant, and a water-based medium (preferably a solvent mixture of water and organic solvent) by a disperser.
Specific examples of the method for preparing the pigment composition of the invention include the following methods.

(1) The dispersant is added to a solvent to prepare a dispersant solution (preparation process of a dispersant solution).
(2) A solution of a neutralizer (for example, a basic substance) is added to the dispersant solution (neutralization process).
(3) A separately-prepared pigment water dispersion is added to the neutralized solution and dispersed to obtain a pigment dispersion slurry (pigment dispersion slurry-formation process).
(4) The pigment dispersion slurry is subjected to finely dispersing to obtain a pigment dispersion (a pigment composition) (dispersing process of pigment).

The solution of the neutralizer in (2) may be prepared by dissolving the neutralizer in the solvent, which is preferably water.
As the neutralizer, a basic substance may be used when the ionic group of the dispersant of the invention is an anionic group, and an acidic substance may be used when the ionic group of the dispersant is a cationic group. The pigment water dispersion in (3) may be prepared by adding the pigment to water and dispersing it with the use of a disperser.
In producing the water-based pigment composition, kneading dispersion treatment may be performed while applying strong shear force by using a twin roll, a triple roll, a ball mill, a thoron mill, a disper, a kneader, a co-kneader, a homogenizer, a blender, a single-screw, a double-screw extruder or the like.
The details of kneading and dispersing are described in "Paint Flow and Pigment Dispersion" written by T. C. Patton (1964, published by John Wiley and Sons).
In producing the pigment composition, as required, fine dispersion treatment may be performed by using a vertical- or horizontal sand grinder, a pin mill, a slitting mill, a ultrasonic disperser or the like with beads made of glass, zirconia or the like having a particle diameter of 0.01 mm to 1 mm.
The pigment in the water-based pigment composition thus obtained may maintain favorable dispersion state, and the obtained pigment composition may be excellent in stability over time.

(Water-based Pigment dispersion)

A water-based pigment dispersion of the invention contains the pigment composition of the invention and water or a water-based carrier medium. The water-based carrier medium contains water and at least one kind of an organic solvent.
The configuration of the water-based pigment dispersion may provide favorable dispersibility and stability of the pigment. A film formed by using the water-based pigment dispersion may be thin and have high optical density.
Components of the water-based pigment composition of the invention are described.

(Water-based Carrier medium)

The water-based carrier medium of the water-based pigment dispersion contains water and at least a water-soluble organic solvent. The water-soluble organic solvent may be used alone or in a combination of plural kinds of them. The water-soluble organic solvent can be contained as a drying inhibitor and/or as a permeation accelerator.
When the water-based pigment dispersion of the invention is particularly applied as a water-based ink for inkjet recording, which is to be described later, to an image recording method by an inkjet method, clogging of nozzle, which may possibly be generated by drying of an ink at an inkjet orifice, may be effectively prevented by the drying inhibitor.
The drying inhibitor is preferably a water- soluble organic solvent having vapor pressure lower than that of water. Specific examples of the drying inhibitor include polyhydric alcohols such as ethylene glycol, propylene glycol, diethylene glycol, polyethylene glycol, thiodiglycol, dithiodiglycol, 2- methyl- 1, 3- propanediol, 1, 2, 6- hexanetriol, acetylene glycol derivatives, glycerin and trimethylolpropane; lower alkyl ethers of polyhydric alcohol, such as ethylene glycol monomethyl (or ethyl) ether, diethylene glycol monomethyl (or ethyl) ether and triethylene glycol monoethyl (or butyl) ether; heterocycles such as 2- pyrrolidone, N- methyl- 2- pyrrolidone, 1, 3- dimethyl- 2- imidazolidinone and N- ethylmorpholine; sulfur- containing compounds such as sulfolane, dimethylsufoxide and 3- sulfolene; polyfunctional compounds such as diacetone alcohol and diethanolamine; and urea compounds. Above all, polyhydric alcohols such as

glycerin and diethylene glycol are preferred as the drying inhibitor.
The drying inhibitor may be used singly or as a mixture of two or more kinds of them.
The drying inhibitor may be preferably contained in an amount of from 5% to 50% by mass with respect to the total amount of the ink.

The permeation accelerator is preferably used for the purpose of well permeating the ink into a recording medium (for example, printing paper). Specific examples of the permeation accelerator include alcohols such as ethanol, isopropanol, butanol, diethylene glycol monobutyl ether, triethylene glycol monobutyl ether and 1,2-hexanediol; sodium lauryl sulfate, sodium oleate or nonionic surfactants.
When the permeation accelerator is contained in the water-based pigment dispersion in an amount of from 5% to 30% by mass, sufficient effect can be exhibited. The permeation accelerator is preferably used within a range of the addition amount such that blurring of printing and print-through are not generated.
Other than the applications described above, the water-soluble organic solvent can be used to adjust viscosity. Specific examples of the water-soluble organic solvent that can be used to adjust viscosity include alcohols, polyhydric alcohols, glycol derivatives, amines, and other polar solvents. The water-soluble organic solvent may be used alone or as a mixture of two or more of them.

(Other Additives)

Examples of the other additives which can be used in the invention include known additives which can be used in pigment dispersions and water-based inks.
Examples of the other additives which can be used in the invention include conventional additives such as color fading inhibitors, emulsion stabilizers, permeation accelerators, ultraviolet absorbers, preservatives, mildew-proofing agents, pH regulators, surface tension regulators, defoamers, viscosity regulators, dispersants, dispersion stabilizers, anti-rust agents and chelating agents. The various additives may be added after preparation of the water-based pigment dispersion, or may be added at the time of preparation of the water-based pigment dispersion.

The ultraviolet absorber is used for the purpose of improving storability of an image. Examples of the ultraviolet absorber include benzotriazole compounds described in, for example, JP-A Nos. 58-185677, 61-190537, 2-782, 5-197075 and 9-34057; benzophenone compounds described in, for example, JP-A Nos. 46-2784 and 5-194483, and US Patent No. 3,214,463; cinnamic acid compounds described in, for example, Japanese Patent Application Publication (JP-B) Nos. 48-30492 and 56-21141, and JP-A No. 10-88106; triazine compounds described in, for example, JP-A Nos. 4-298503, 8-53427, 8-239368 and 10-182621, and Japanese National Phase Publication No. 8-501291; compounds described in Research Disclosure No. 24239; and compounds that absorb ultraviolet light and emit fluorescence, i.e., fluorescent brighteners, represented by stilbene compounds or benzoxazole compounds.

The color fading inhibitor is used for the purpose of improving storability of an image. Examples of the color fading inhibitor that can be used include various organic color fading inhibitors and metal complex color fading inhibitors. Examples of the organic color fading inhibitor include hydroquinones, alkoxyphenols, dialkoxyphenols, phenols, anilines, amines, indanes, chromanes, alkoxyanilines and heterocycles. Examples of the metal complex color fading inhibitor include a nickel complex and a zinc complex. More specifically, compounds described in the patents cited in Research Disclosure No. 17643, chapter VII, items I to J; Research Disclosure No. 15162: Research Disclosure No. 18716, page 650, the left-hand column; Research Disclosure No. 36544, page 527; Research Disclosure No. 307105, page 872; and Research Disclosure No. 15162, and compounds included in the formulae of the representative compounds and the exemplified compounds described on pages 127 to 137 of JP-A No. 62-215272 can be used.

Examples of the mildew- proofing agent include sodium dehydroacetate, sodium benzoate, sodium pyridinethion- 1- oxide, p- hydroxybenzoic acid ethyl ester, 1, 2- benzisothiazolin- 3- one and its salt. Those are preferably used in the water- based pigment composition in an amount of from 0.02% to 1.00% by mass.
A neutralizer (organic acid, organic base, inorganic acid or inorganic base) may be used as the pH regulator. The pH regulator may be preferably added in an amount such that the water- based pigment dispersion has pH of from 6 to 10, and more preferably added in an amount such that the water- based pigment dispersion has pH of from 7 to 10, for the purpose of neutralization or improving stability of the water- based pigment dispersion over time.

Examples of the surface tension regulator include nonionic surfactants, cationic surfactants, anionic surfactants and betaine surfactants.
The amount of the surface tension regulator to be added is preferably in an amount such that the surface tension of the water-based pigment dispersion is adjusted to from 20 mN/m to 60 mN/m, which is more preferably from 20 mN/m to 45 mN/m, and further preferably from 25 mN/m to 40 mN/m, in order to well eject the water-based pigment composition by an inkjet method.
The surface tension of the water-based pigment dispersion can be measured using, for example, the Wilhelmy method, when the water-based pigment dispersion is used as it is.

Specific examples of the surfactant are as follows. Namely, specific examples of a hydrocarbon surfactant

include anionic surfactants such as fatty acid salts, alkyl sulfate ester salts, alkyl benzene sulfonates, alkyl naphthalene sulfonates, dialkyl sulfosuccinates, alkyl phosphate ester salts, naphthalenesulfonic acid- formalin condensates or polyoxyethylene alkyl sulfate ester salts; and nonionic surfactants such as polyoxyethylene alkyl ether, polyoxyethylene alkyl allyl ether, polyoxyethylene fatty acid ester, sorbitan fatty acid ester, polyoxyethylene sorbitan fatty acid ester, polyoxyethylene alkyl amine, glycerin fatty acid ester or oxyethylene oxypropylene block copolymer. An acetylene- based surfactant may be preferably used in the water- based pigment dispersion. Examples of the acetylene- based surfactant include SURFYNOLS (trade name, products of Air Products & Chemicals), OLFINE E1010 (trade name, products of Nissin Chemical Industry Co., Ltd.) and the like. Further, amine oxide amphoteric surfactants such as N, N- dimethyl-N- alkylamine oxide may be also preferably used.
Examples of the surfactant further include materials described on pages 37 to 38 of JP- A No. 59- 157636 or Research Disclosure No. 308119 (1989) .
When fluorocarbon (alkyl fluoride) surfactants, silicone surfactants and the like, such as those described in JP- A Nos. 2003- 322926, 2004- 325707 or 2004- 309806 are used, scratch resistance may be improved.
The surface tension regulator may also be used as a defoamer, and fluorine compounds, silicone compounds, chelating agents represented by EDTA, and the like may be also used in the invention.

When the water-based pigment dispersion is applied by an inkjet method as it is, the water-based pigment dispersion preferably has a viscosity in a range of from 1 mPa·s to 30 mPa·s, which is more preferably in a range of from 1 mPa·s to 20 mPa·s, and is further preferably in a range of from 2.5 mPa·s to 15 mPa·s, from the standpoints of droplet ejection stability and aggregation speed.
The value of the viscosity of the pigment dispersion is the one obtained by measurement at 25 °C.
The viscosity of the water-based pigment composition can be measured using, for example, an E-type viscometer.

[Method for Producing Water-based pigment dispersion]

Examples of a method for producing the water-based pigment dispersion of the invention include a method including obtaining a mixture by mixing, the pigment composition, an organic solvent which can dissolve the dispersant, and water or a water-based carrier medium which contains water and at least one organic solvent and removing at least a part of the organic solvent which can dissolve the dispersant from the mixture. This configuration of the method enables to obtain a fine and stable water-based dispersion of the pigment over time, and to produce such a water-based pigment dispersion effectively.

The producing method preferably includes the following processes (1) and (2).
Process (1): subjecting, to dispersion treatment, a mixture containing a pigment, a dispersant, an organic solvent which is capable to dissolve the dispersant, water or a water-based carrier medium which contains water and at least one organic solvent, and a neutralizer or surfactant as required.
Process (2): removing the organic solvent from the resultant of the process (1)
In the process (1), the dispersant is firstly rendered to dissolve in the organic solvent and to obtain a mixture thereof. A pigment, water or the water-based carrier medium which contains water and at least one organic solvent are added to and mixed with the mixture, wherein a neutralizer and a surfactant may be added and mixed to the mixture as required, and then subjecting dispersion treatment so as to obtain a water-based pigment dispersion with a configuration of oil in water. When neutralization is performed, neutralization degree is not particularly limited and, in general, is preferably set in neutral for example, to a pH of 4.5 to 10 in the water-based pigment dispersion finally obtained. A certain pH of the water-based pigment dispersion may be determined according to a certain neutralization degree dependant from the dispersant used.
Then, the water-based pigment dispersion can be obtained by removing the organic solvent in the process (2).

The water-based pigment dispersion of the invention is preferably produced by the producing method including the following processes (1') and (2').
Process (1'): subjecting, to dispersion treatment, a mixture containing the pigment composition (including the dispersant and pigment), and water or a water-based carrier medium having water and at least one organic solvent, and a neutralizer and a surfactant as required.
Process (2'): removing the organic solvent from the resultant of the process (1')
In the process (1'), water or the water-based carrier medium is firstly added to and mixed with the pigment composition, wherein a neutralizer and a surfactant may be added and mixed to the organic solvent as required, and then dispersing the mixture by using a disperser so as to obtain a dispersion of with a configuration of water-based medium-organic solvent mixture.
Then, the water-based pigment dispersion may be obtained by removing the organic solvent in the process (2').

The pigment composition used in the producing method for the water-based pigment dispersion is the same as the pigment composition of the invention, and preferable examples are also similar. The water-based carrier medium used in the producing method for the water-based pigment dispersion is the same as the medium of the water-based

pigment dispersion, and preferable examples are also similar.
Examples of a disperser usable in the producing method for the water-based pigment dispersion of the invention include dispersers referred for mixing and dispersing the pigment composition.
In the producing method for the water-based pigment dispersion of the invention, a method for removing the organic solvent is not particularly limited, and the removal may be performed by a known method such as reduced-pressure distillation.

The average particle diameter of the pigment obtained by the method for producing the water-based pigment dispersion of the invention is preferably 10 nm or more but less than 200 nm, more preferably 30 nm or more but less than 130 nm, and further preferably 60 nm or more but less than 100 nm. Such a range is advantageous in coloring property and dispersion stability of a water-based pigment dispersion. Further, such a range is advantageous in ejection stability when the water-based pigment dispersion is applied to an inkjet system.
The average particle diameter of dispersed particles of the pigment is adopted a volume-average particle diameter measured by using dynamic light scattering.

The water-based pigment dispersion of the invention may be used, for example, for a water-based ink for inkjet recording and a water-based ink for writing materials such as water-based ball-point pens or marker pens. In this case, in order to prevent inkjet nozzles and pen tips from clogging due to drying, a low-volatile or nonvolatile water-soluble organic solvent among the above-described water-soluble organic solvents may be also added to the water-based pigment dispersion. In order to improve permeability of the water-based pigment dispersion into a recording medium, a volatile solvent may be also added to the water-based pigment dispersion.

(Water-based ink for Inkjet recording)

The water-based ink for inkjet recording of the invention (which may referred to as "water-based ink" or "aqueous ink" herein) contains a water-based pigment dispersion produced by the producing method of the water-based pigment dispersion of the invention.
The water-based ink for inkjet recording of the invention may be prepared by using the water-based pigment dispersion of the invention as it is, or by diluting with the water-based carrier medium, with further adding thereto the drying inhibitor, or other additives, as required.

The amount of the pigment contained in the water-based ink is preferably in a range of 0.1% to 20% by mass, and is more preferably in a range of 0.5% to 10% by mass, with respect to the amount of the water-based ink from the viewpoints of ink colorability, storage stability and ejection property of the water-based ink. The amount of the dispersant contained in the water-based ink is preferably in a range of 1% to 150% by mass, and is more preferably in a range of 5% to 100% by mass, with respect to the amount of the pigment (coloring agent) from the viewpoint of dispersibility, storage stability and ejection property of the water-based ink.

The pH of the water-based ink is preferably in a range of 7 to 10. When the pH is set in this range, stability of the water-based ink over time may be improved and corrosion of units of an inkjet recording device, which is a device to which the water-based ink applied to, can be suppressed.
Examples of a basic substance which can be used for neutralizing the water-based ink include inorganic alkaline agents such as alkali metal hydroxides such as sodium hydroxide or potassium hydroxide, and organic amines such as diethanolamine or triethanolamine. The neutralizing may also include organic acids such as citric acid or tartaric acid, mineral acids such as hydrochloric acid or phosphoric acid, and the like as required.

In order to prevent inkjet nozzles from clogging due to drying, a low-volatile or nonvolatile solvent, which can be selected from the above water-soluble organic solvents, may be added to the water-based ink of the invention. In order to improve permeability into a recording medium, a volatile solvent may be added to the water-based ink of the invention. In order to provide a proper surface tension, a surfactant may be preferably added to the water-based ink of the invention when the ink is used for inkjet recording.

The water-based ink of the invention for inkjet recording may preferably include at least one resin particle. Ink fixing property of the water-based ink may be improved by including the resin particles in the water-based ink. The resin particles used in the invention may be in a state of latex. Examples of the resin constituting the resin particles include acrylic resins, vinyl acetate resins, styrene-butadiene resins, vinyl chloride resins, acryl-styrene resins, butadiene resins, styrenic resins, crosslinked acrylic resins, crosslinked styrenic resins, benzoguanamine resins, phenolic resins, silicone resins, epoxy resins, urethane resins, paraffin resins, or fluorine resins.
Among the above resins, acrylic resins, acryl-styrene resins, styrenic resins, crosslinked acrylic resins, and crosslinked styrenic resins are preferable.

The weight average molecular weight of the resin that forms the resin particles, is preferably 10000 to 200000, and more preferably 100000 to 200000.
The glass transition temperature (Tg) of the resin particles is preferably 30°C or higher, more preferably 40°C or higher, and even more preferably 50°C or higher.

The average particle diameter of the resin particle is preferably from 10 nm to 1 μm, more preferably from 10 nm to 200 nm, even more preferably from 20 nm to 100 nm, and particularly preferably from 20 nm to 50 nm. The particle size distribution of the resin particle is not particularly restricted. The particle size distribution may be either a broad particle size distribution or a monodispersed particle size distribution. In embodiments, two kinds of dispersion having a monodispersed particle size distribution may be used in combination.

The addition amount of the resin particles is preferably from 0.5% by mass to 20% by mass, more preferably from 3% by mass to 20% by mass, and even more preferably from 5% by mass to 15% by mass with respect to the total amount of the water-based ink for inkjet recording.

The content of the resin particles is preferably from 50% by mass to 1000% by mass, and more preferably from 100% by mass to 400% by mass, with respect to the amount of the pigment.

EXAMPLES

The present invention is hereinafter described more specifically by referring to examples. Materials, used amounts, ratios, processing contents and procedures described in the following examples may be properly modified. Therefore, the scope of the invention is not limited to the specific examples described below. In the following Examples, the "part(s)" and "%" refer to "part(s) by mass" and "% by mass" respectively, unless specifically mentioned.

[Preparation Example of Dispersant]

- Monomer Synthesis Example 1. (M-2p, Synthesis of para-substituted isomer)

Into a 5-L three-necked flask equipped with a stirrer and a reflux condenser was charged with 1800 mL of dimethyl sulfoxide in which 375 g of acridone and 84.8 g of sodium hydroxide had been dissolved, followed by stirring at room temperature for 10 minutes. Then, 440 g of p-chloromethylstyrene was added dropwise over 10 minutes, and the dropping funnel was co-washed with 300 mL of dimethyl sulfoxide. The mixture was heated to 55°C and subjected to a reaction for 7 hours. After the completion of the reaction, a mixed solution of 750 mL of methanol and 750 mL of water was added dropwise at 55°C over 10 minutes, followed by stirring at 40°C for 30 minutes and further at a temperature of 30°C or lower for 1 hour. The resulting slurry was taken out by vacuum filtration and was charged into a 5-L three-necked flask, followed by addition of 3 L of methanol. The mixture was stirred at 50°C for 30 minutes, at a temperature of 45°C or lower for 30 minutes, and at a temperature of 30°C or lower for 1 hour, and then was subjected to vacuum filtration. Thus, 484 g of a monomer (M-2p) represented by Formula (6) was obtained.

- Monomer Synthesis Example 2. (M-2m, Synthesis of meta-substituted isomer)

Monomer (M-2m) represented by Formula (5) was obtained in a manner substantially similar to that in Monomer synthesis 1 except for using m-chloromethylstyrene instead of the p-chloromethylstyrene in Monomer synthesis 1.

- Monomer Synthesis Example 3. (M-2o, Synthesis of ortho-substituted isomer)

Monomer (M-2o) represented by Formula (7) was obtained in a manner substantially similar to that in Monomer synthesis 1 except for using o-chloromethylstyrene instead of the p-chloromethylstyrene in Monomer synthesis 1.

- Monomer Synthesis Example 4. (M-4p, Synthesis of para-substituted isomer)

In 1500 mL of N-methylpyrrolidone was dissolved 355.0 g of 1,8-naphthalimide. Then, 0.57 g of nitrobenzene was added thereto at 25°C, and 301.4 g of DBU(diazabicycloundecene) was further added dropwise thereto. After stirring for 30 minutes, 412.1 g of p-chloromethylstyrene was added dropwise, and then heating and stirring were performed at 60°C for additional 4 hours. To the reaction solution was added 2.7 L of isopropanol and 0.9 L of distilled water, and the mixture was stirred while being cooled at 5°C. The resulting precipitate was collected by filtration and washed with 1.2 L of isopropanol to obtain 544.0 g of monomer (M-4p) represented by Formula (6).

- Monomer Synthesis Example 5. (M-4m, Synthesis of meta-substituted isomer)

Monomer (M-4m) represented by Formula (5) was obtained in a manner substantially similar to that in Monomer synthesis 1 except for using m-chloromethylstyrene instead of the p-chloromethylstyrene in Monomer synthesis 4.

- Monomer Synthesis Example 6. (M-4o, Synthesis of ortho-substituted isomer)

Monomer (M-4o) represented by Formula (7) was obtained in a manner substantially similar to that in Monomer synthesis 4 except for using o-chloromethylstyrene instead of the p-chloromethylstyrene in Monomer synthesis 4.

Moreover, other monomers in the present invention also can be synthesized in similar procedures.

By mixing the above-obtained isomers of M-2 and M-4, i.e., meta-substituted isomers (M-2m, M-4m), para-substituted isomers (M-2p, M-4p), and ortho-substituted isomers (M-2o, M-4o) at a predetermined ratio, mixtures of meta-substituted isomer, para-substituted isomer of the respective monomers were prepared and the mixtures were used for the following synthesis of dispersants.

(Synthesis of dispersants D-1 to D-23)

To a 300-mL three-necked flask equipped with a stirrer and a reflux condenser were added 90 g of a monomer mixture of a monomer composition given in Tables 1 to 3 and 126 g of methyl ethyl ketone, and the mixture was heated to 75°C under a nitrogen atmosphere. Then 1.20 g of dimethyl 2,2'-azobisisobutyrate dissolved in 8 g of methyl ethyl ketone was added to the three-necked flask, followed by execution of a reaction for 2 hours. Moreover, 0.50 g of dimethyl 2,2'-azobisisobutyrate dissolved in 0.6 g of methyl ethyl ketone was added thereto, followed by execution of a reaction for 2 hours. Then, 0.50 g of dimethyl 2,2'-azobisisobutyrate dissolved in 0.6 g of methyl ethyl ketone was added thereto and the temperature was elevated to 80°C. By heating and stirring for 4 hours, all unreacted monomers were caused to react. After the completion of the reaction, the resulting polymer solution was diluted by the addition of 33 g of methyl ethyl ketone.

The composition of the resulting polymer was checked by $^1$H-NMR. Here, the weight-average molecular weight (Mw) was determined by using polystyrene as a standard reference material through detection using solvent THF and a differential refractometer by the use of a GPC analysis device in which columns of TSKgel GMHxL, TSKgel G4000HxL and TSKgel G2000HxL (trade names, all manufactured by Tosoh Corp.) were connected in series.

The contents of meta isomer contents given in Tables 1 to 3 are each a content (%) of the monomer represented by Formula (5) with respect to a total amount of the monomers represented by Formula (5), (6), or (7), expressed by mass basis. Moreover, the isomer ratio is the constitution ratio of the respective monomers represented by Formulae (5) to (7) and means (monomer (o- isomer) represented by Formula (7) ) : (monomer (m- isomer) represented by Formula (5) ) : (monomer (p- isomer) represented by Formula (6) ) .

Table 1

| Synthesis Example No. | Monomer Mixture | | Isomer Ratio (o: m: p) | Content of meta-Isomer (%) | Weight average molecular weight | NOTE |
|---|---|---|---|---|---|---|
| | Kind of Monomer | Content (%) | | | | |
| D-1 | M-2 | 15.0 | 3:28:69 | 28 | 34800 | Invention |
| | Methacrylic Acid | 10.0 | | | | |
| | Ethyl Methacrylate | 75.0 | | | | |
| D-2 | M-2 | 15.0 | 3:30:67 | 30 | 39000 | Invention |
| | Acrylic Acid | 10.0 | | | | |
| | Methyl Methacrylate | 75.0 | | | | |
| D-3 | M-2 | 15.0 | 3:33:64 | 33 | 32000 | Invention |
| | Methacrylic Acid | 10.0 | | | | |
| | Ethyl Methacrylate | 75.0 | | | | |

(continued)

| Synthesis Example No. | Monomer Mixture | | Isomer Ratio (o: m: p) | Content of meta-Isomer (%) | Weight average molecular weight | NOTE |
|---|---|---|---|---|---|---|
| | Kind of Monomer | Content (%) | | | | |
| D-4 | M-2 | 15.0 | 3:35:62 | 35 | 43300 | Invention |
| | Acrylic Acid | 10.0 | | | | |
| | Methyl Acrylate | 75.0 | | | | |
| D-5 | M-2 | 15.0 | 3:40:57 | 40 | 33800 | Invention |
| | Methacrylic Acid | 10.0 | | | | |
| | Benzyl Methacrylate | 75.0 | | | | |
| D-6 | M-2 | 15.0 | 3:45:52 | 45 | 43000 | Invention |
| | Methacrylic Acid | 10.0 | | | | |
| | Ethyl Methacrylate | 75.0 | | | | |
| D-7 | M-4 | 15.0 | 2:28:70 | 28 | 45600 | Invention |
| | Methacrylic Acid | 10.0 | | | | |
| | Ethyl Methacrylate | 75.0 | | | | |
| D-8 | M-4 | 15.0 | 2:30:68 | 30 | 36100 | Invention |
| | Methacrylic Acid | 10.0 | | | | |
| | Ethyl Methacrylate | 75.0 | | | | |

Table 2

| Synthesis Example No. | Monomer Mixture | | Isomer Ratio (o: m: p) | Content of meta-Isomer (%) | Weightaverage molecular weight | NOTE |
|---|---|---|---|---|---|---|
| | Kind of Monomer | Content (%) | | | | |
| D-9 | M-4 | 15.0 | 2:33:65 | 33 | 41200 | Invention |
| | Acrylic Acid | 10.0 | | | | |
| | Ethyl Acrylate | 75.0 | | | | |
| D-10 | M-4 | 15.0 | 2:35:63 | 35 | 51200 | Invention |
| | Methacrylic Acid | 10.0 | | | | |
| | Ethyl Methacrylate | 75.0 | | | | |
| D-11 | M-4 | 15.0 | 2:40:58 | 40 | 40100 | Invention |
| | Methacrylic Acid | 10.0 | | | | |
| | Ethyl Methacrylate | 75.0 | | | | |

(continued)

| Synthesis Example No. | Monomer Mixture | | Isomer Ratio (o: m: p) | Content of meta-Isomer (%) | Weight average molecular weight | NOTE |
|---|---|---|---|---|---|---|
| | Kind of Monomer | Content (%) | | | | |
| D-12 | M-4 | 15.0 | 20 : 45 : 35 | 45 | 35600 | Invention |
| | Methacrylic Acid | 10.0 | | | | |
| | Ethyl Methacrylate | 75.0 | | | | |
| D-13 | M-1 | 15.0 | 0:35:65 | 35 | 36200 | Invention |
| | N,N-Dimethylaminoethyl Methacrylate | 10.0 | | | | |
| | Methyl Methacrylate | 75.0 | | | | |
| D-14 | M-3 | 15.0 | 65:35:0 | 35 | 50100 | Invention |
| | N,N-Dimethylaminoethyl Methacrylate | 10.0 | | | | |
| | Ethyl Methacrylate | 75.0 | | | | |
| D-15 | M-9 | 15.0 | 0:35:65 | 35 | 26800 | Invention |
| | 2-Acrylamido-2-methyl propanesulfonic acid | 10.0 | | | | |
| | Ethyl Acrylate | 75.0 | | | | |
| D-16 | M-7 | 60.0 | 15:45:40 | 45 | 23000 | Invention |
| | N,N-Dimethylaminoethyl Methacrylate | 40.0 | | | | |

Table 3

| Synthesis Example No. | Monomer Mixture | | Isomer Ratio (o: m: p) | Content of meta-Isomer (%) | Weight average molecular weight | NOTE |
|---|---|---|---|---|---|---|
| | Kind of Monomer | Content (%) | | | | |
| D-17 | M-2 | 15.0 | 0:0:100 | 0 | 35200 | Comparative |
| | Methacrylic Acid | 10.0 | | | | |
| | Ethyl Methacrylate | 75.0 | | | | |
| D-18 | M-2 | 15.0 | 0:18:82 | 18 | 42300 | Comparative |
| | Methacrylic Acid | 10.0 | | | | |
| | Ethyl Methacrylate | 75.0 | | | | |

(continued)

| Synthesis Example No. | Monomer Mixture | | Isomer Ratio (o: m: p) | Content of meta-Isomer (%) | Weight average molecular weight | NOTE |
|---|---|---|---|---|---|---|
| | Kind of Monomer | Content (%) | | | | |
| D-19 | M-2 | 15.0 | 0:50:50 | 50 | 40400 | Comparative |
| | Methacrylic Acid | 10.0 | | | | |
| | Stearyl Methacrylate | 75.0 | | | | |
| D-20 | M-2 | 15.0 | 0:70:30 | 70 | 29600 | Comparative |
| | Methacrylic Acid | 10.0 | | | | |
| | Ethyl Methacrylate | 75.0 | | | | |
| D-21 | M-4 | 15.0 | 2:90:8 | 90 | 39800 | Comparative |
| | Methacrylic Acid | 10.0 | | | | |
| | Ethyl Methacrylate | 75.0 | | | | |
| D-22 | M-11 | 15.0 | 2:0:98 | 0 | 25000 | Comparative |
| | Methacrylic Acid | 10.0 | | | | |
| | Ethyl Methacrylate | 75.0 | | | | |
| D-23 | M-11 | 15.0 | 2:0:98 | 0 | 40500 | Comparative |
| | Methacrylic Acid | 10.0 | | | | |
| | Ethyl Methacrylate | 75.0 | | | | |

[Preparation of water-based pigment dispersion J-1]

10 parts of Pigment Red 122 (CROMOPHTAL JET MAGENTA DMQ (produced by Ciba Specialty Chemicals; magenta pigment), 4.5 parts of dispersant D-1 obtained above, 42 parts of methyl ethyl ketone, 5.5 parts of 1 mol/L aqueous NaOH solution (1 equivalent to the amount of the acidic group contained in the dispersant), and 87.2 parts of ion-exchanged water were mixed using a disper. Subsequently, the mixture was subjected to 10-pass treatment by using a dispersing machine (MICROFLUIDIZER M-140K; trade name, 150MPa). Then, methyl ethyl ketone was removed from the resulting dispersion under reduced pressure at 55°C, and a part of water was further removed. Thus, water-based pigment dispersion J-1 having a pigment content of 10.2% was obtained.

[Preparation of water-based pigment dispersions J-2 to J-12, J-15, J-17 to J-23]

Water- based pigment dispersions J- 2 to J- 12, J- 15, J- 17 to J- 23 were each prepared in a manner substantially similar to that in the preparation of water- based pigment dispersion J- 1 except for using the dispersant given in Table 4 instead of dispersant D- 1 used in the preparation of water- based pigment dispersion J- 1.

[Preparation of water-based pigment dispersions J-13 to J-14, J-16]

Water- based pigment dispersions J- 13 to J- 14 and J- 16 were each prepared by using the dispersant given in Table 4 instead of dispersant D- 1 used in the preparation of water- based pigment dispersion J- 1 and using 1 mol/L aqueous HCl solution instead of 1 mol/L aqueous NaOH solution in 1 equivalent amount with respect to the amount of the basic group contained in the dispersant.

[Evaluation of water-based pigment dispersion]

By the use of the water-based pigment dispersion obtained above, the initial particle diameter and the stability over time were evaluated as follows.

(1) Initial particle diameter

As to the water-based pigment dispersions obtained above, the volume-average particle diameter was measured by a dynamic light scattering method by using a Nanotrac particle size analyzer UPA-EX150 (trade name, manufactured by Nikkiso Co., Ltd.) within one hour after the preparation of the water-based pigment dispersion, and the volume-average particle diameter was designated as the initial particle diameter. The measured initial particle diameter was evaluated in accordance with the following criteria.

Measurement condition: The measurement was performed at 25°C by an ordinary method by using a sample prepared by adding 10 mL of water to 10 μL of a dispersion.

- Criteria

A: The initial particle diameter is less than 100 nm.
B: The initial particle diameter is 100 nm or more but less than 130 nm.
C: The initial particle diameter is 130 nm or more but less than 200 nm.
D: The initial particle diameter is 200 nm or more.

(2) Stability over time

As to the stability over time of the above-obtained water-based pigment dispersions, the change in average particle diameter and the change in viscosity were evaluated by using a water-based pigment dispersion within one hour after preparation and a water-based pigment dispersion after aging, that is, after leaving the water-based pigment dispersion at 60°C for 336 hours in a hermetically sealed condition.

(a) Average particle diameter

The rate of change in average particle diameter was calculated by dividing the difference between the average particle diameter after aging measured in the same manner as described above using a water-based pigment dispersion after aging (particle diameter after aging) and the initial particle diameter measured in the aforementioned evaluation of the initial particle diameter by the initial particle diameter. The rate of change in average particle diameter is expressed by the following equation 1.

(Equation 1): Rate of change in average particle diameter = (Average particle diameter after aging - Initial particle diameter)/(Initial particle diameter)

The obtained rate of change in average particle diameter was evaluated in accordance with the following criteria.

- Criteria

A: The rate of change in average particle diameter is 10% or less

B: The rate of change in average particle diameter is more than 10% but 25% or less.

C: The rate of change in average particle diameter is more than 25% but 50% or less.

D: The rate of change in average particle diameter is more than 50%.

(b) Viscosity

The viscosity of a water-based pigment dispersion within 1 hour after its preparation was measured at 25°C by using a TV-22 type viscometer (trade name, manufactured by Toki Sangyo Co., Ltd.), and the measured viscosity was let be the initial viscosity.

Moreover, a viscosity was measured similarly by using a water- based pigment dispersion after aging, and the measured viscosity was designated as the viscosity after aging. The rate of change in viscosity was calculated by dividing the difference between the viscosity after aging and the initial viscosity by the initial viscosity. The rate of change in viscosity is expressed by the following equation 2.

(Equation 2): Rate of change in viscosity = (Viscosity after aging - Initial viscosity)/( Initial viscosity)

The obtained rate of change in viscosity was evaluated in accordance with the following criteria.

- Criteria -

A: The rate of change in viscosity is 10% or less.
B: The rate of change in viscosity is more than 10% but 25% or less.
C: The rate of change in viscosity is more than 25% but 50% or less.
D: The rate of change in viscosity is more than 50%.

Table 4

| Aqueous Pigment Dispersion No. | Dispersant No. | Content of meta-Isomer (%) | Initial Particle Diameter | | Stability over Time | | | | NOTE |
|---|---|---|---|---|---|---|---|---|---|
| | | | (nm) | Evaluation | D.C (%) | Evaluation | V.C (%) | Evaluation | |
| J-1 | D-1 | 28 | 112 | B | 24 | B | 20 | B | Invention |
| J-2 | D-2 | 30 | 96 | A | 16 | B | 9 | A | Invention |
| J-3 | D-3 | 33 | 126 | B | 7 | A | 4 | A | Invention |
| J-4 | D-4 | 35 | 102 | B | 9 | A | 4 | A | Invention |
| J-5 | D-5 | 40 | 89 | A | 8 | A | 5 | A | Invention |
| J-6 | D-6 | 45 | 86 | A | 5 | A | 12 | B | Invention |
| J-7 | D-7 | 28 | 93 | A | 22 | B | 16 | B | Invention |
| J-8 | D-8 | 30 | 114 | B | 14 | B | 15 | B | Invention |
| J-9 | D-9 | 33 | 99 | A | 8 | A | 8 | A | Invention |
| J-10 | D-10 | 35 | 84 | A | 5 | A | 10 | B | Invention |
| J-11 | D-11 | 40 | 96 | A | 9 | A | 8 | A | Invention |
| J-12 | D-12 | 45 | 87 | A | 3 | A | 6 | A | Invention |
| J-13 | D-13 | 35 | 126 | B | 6 | A | 6 | A | Invention |
| J-14 | D-14 | 35 | 118 | B | 20 | B | 23 | B | Invention |

(continued)

| Aqueous Pigment Dispersion No. | Dispersant No. | Content of meta-Isomer (%) | Initial Particle Diameter | | Stability over Time | | | | NOTE |
|---|---|---|---|---|---|---|---|---|---|
| | | | (nm) | Evaluation | D.C (%) | Evaluation | V.C (%) | Evaluation | |
| J-15 | D-15 | 35 | 95 | A | 21 | B | 22 | B | Invention |
| J-16 | D-16 | 45 | 110 | B | 16 | B | 19 | B | Invention |
| J-17 | D-17 | 0 | 119 | B | 86 | D | 66 | D | Comparative |
| J-18 | D-18 | 18 | 90 | A | 46 | C | 49 | C | Comparative |
| J-19 | D-19 | 50 | 90 | A | 33 | C | 126 | D | Comparative |
| J-20 | D-20 | 70 | 89 | A | 79 | D | 143 | D | Comparative |
| J-21 | D-21 | 90 | 98 | A | 90 | D | 80 | D | Comparative |
| J-22 | D-22 | 0 | 122 | B | 115 | D | 88 | D | Comparative |
| J-23 | D-23 | 0 | 105 | B | 120 | D | 96 | D | Comparative |

In Table 4, D.C denotes a rate of change in average particle diameter and V.C denotes a rate of change in viscosity.

As is clear from Table 4, it is shown that the water-based pigment dispersions of the present invention had very small dispersed particle diameters of the pigment and were good in stability over time, but the comparative water-based pigment dispersions were poor in stability over time.

[Preparation of water-based ink for inkjet recording]

(Preparation of resin particle dispersion)

A water- based dispersion (latex) of resin particles PL- 01 was prepared as follows.
Namely, 19.8 g of LATEMUL ASK (trade name, Kao Corporation, carboxylate- based emulsifier), 6 g of 5 mol/L aqueous sodium hydroxide solution, and 0.3 g of 2, 2'- azobis (2- amidinopropane) dihydrochloride were added to 120 g of water and were dissolved homogeneously. The solution was heated to 70°C and then a monomer mixture of 25.9 g of styrene, 26.3 g of butyl acrylate and 5.1 g of acrylic acid was added over 2 hours under a nitrogen gas flow. Then, the mixture was heated at 70°C for 2 hours and at 80°C for 3 hours. After cooling to room temperature, 1 mol/L aqueous sodium hydroxide solution was added under stirring so that the pH might become about 9. Thus, latex PL- 01 was obtained.
The volume average particle diameter of the resulting latex was 115 nm. The solid content of the latex dispersion liquid was 33% by mass.

(Preparation of water-based inks R-1 to R-23)

Water- based inks R- 1 to R- 23 were prepared by using the above- obtained water- based pigment dispersions and resin particle dispersions and mixing respective components so that the following composition might be obtained.

<Composition>

| | |
|---|---|
| (1) Water-based pigment dispersion | 30 parts |
| (2) Resin particle (PL-01) | 8.2 parts |
| (3) Compound resulting from addition of 3 mol of ethylene oxide to sorbitol (water- soluble organic solvent, SP value 35.1) | 5 parts |
| (4) DPGmBE (water-soluble organic solvent, SP value 20.5) | 4 parts |
| (5) DEGmBE (water-soluble organic solvent, SP value 23.7) | 8 parts |
| (6) Glycerol (water-soluble organic solvent, SP value 41.0) | 15 parts |
| (7) Thiodiglycol (water-soluble organic solvent, SP value 31.2) | 2 parts |

(continued)

| | |
|---|---|
| (8) 1,5-Pentanediol (water-soluble organic solvent, SP value 29.0) | 1 part |
| (9) OLFINE E1010 (trade name, manufactured by Nissin Chemical Industry Co., Ltd.) | 1 part |
| (10) Ion exchanged water residual amount such that the total amount becomes | 100 parts |

It is noted that DPGmBE and DEGmBE mean dipropylene glycol monobutyl ether and diethylene glycol monobutyl ether, respectively.

[Evaluation of water-based ink for inkjet recording]

<Ejection property>

Using the above-obtained water-based inks for inkjet recording R-1 to R-23, the performance (ejection property) in use as an ink for inkjet recording was evaluated by the following method.

An inkjet recording device provided with a trial print head with 600 dpi, 256 nozzles was prepared as an inkjet recording device. A water-based ink for inkjet recording was loaded and the occurrence of white spots was evaluated by the following method. FX-L paper (trade name, manufactured by Fuji Xerox Co., Ltd.) was used for a recording medium.

- Evaluation of white spots

The water-based ink for inkjet recording loaded in the inkjet device was discharged onto FX-L paper continuously for 30 minutes, and then, as a maintenance operation, pressure at a pressure of 15 KPa for 10 seconds was applied and wiping was performed with CLEAN WIPER FF-390C (trade name, manufactured by Kuraray Co., Ltd.). After the maintenance operation, discharge was continued for additional 5 minutes. After a lapse of 5 minutes, the solid image (5 cm x 5 cm) recorded on the FX-L paper was observed visually. The number of white spots occurred on the image was counted and an evaluation was made in accordance with the following criteria.

- Criteria

A: Occurrence of white spots is not found.
B: Occurrence of white spots is at one or two sites, which is practically acceptable.
C: Occurrence of white spots is three to ten sites, which is regarded as beingpractically problematic.
D: Occurrence of white spots is at more than ten sites.

Table 5

| Water-Based Ink No. | Water-Based Pigment Dispersion No. | Content of meta-Isomer (%) | Ejection Property | NOTE |
|---|---|---|---|---|
| R-1 | J-1 | 28 | B | Invention |
| R-2 | J-2 | 30 | B | Invention |
| R-3 | J-3 | 33 | B | Invention |
| R-4 | J-4 | 35 | A | Invention |
| R-5 | J-5 | 40 | A | Invention |
| R-6 | J-6 | 45 | A | Invention |
| R-7 | J-7 | 28 | B | Invention |
| R-8 | J-8 | 30 | A | Invention |
| R-9 | J-9 | 33 | A | Invention |
| R-10 | J-10 | 35 | A | Invention |
| R-11 | J-11 | 40 | A | Invention |

(continued)

| Water-Based Ink No. | Water-Based Pigment Dispersion No. | Content of meta-Isomer (%) | Ejection Property | NOTE |
|---|---|---|---|---|
| R-12 | J-12 | 45 | B | Invention |
| R-13 | J-13 | 35 | B | Invention |
| R-14 | J-14 | 35 | B | Invention |
| R-15 | J-15 | 35 | B | Invention |
| R-16 | J-16 | 45 | B | Invention |
| R-17 | J-17 | 0 | D | Comparative |
| R-18 | J-18 | 18 | C | Comparative |
| R-19 | J-19 | 50 | D | Comparative |
| R-20 | J-20 | 70 | D | Comparative |
| R-21 | J-21 | 90 | C | Comparative |
| R-22 | J-22 | 0 | D | Comparative |
| R-23 | J-23 | 0 | C | Comparative |

As shown in Table 5, with the water-based inks for inkjet recording of the present invention, the defect in discharging direction property caused by adhesion of agglomerate to a head was prevented and the occurrence of white spot failure in the recorded image was inhibited successfully.
On the other hand, in the comparative examples, much agglomerate adhered to a head, so that the defect in discharging direction property of the discharged ink could not be prevented and the occurrence of white spot failure could not be inhibited.
According to the present invention, there can be provided a water-based pigment composition excellent in stability over time, in which a pigment has been finely dispersed. Moreover, according to the present invention, there can be provided a method of producing a water-based pigment dispersion excellent in stability over time, in which a pigment is finely dispersed, and a water-based ink for inkjet recording containing a water-based pigment dispersion produced using the method.
Namely, the present invention may provide the following items <1> to <12>.

<1> A water-based pigment composition including, a pigment; a dispersant; and water, the dispersant including: a repeating unit including an ionic group; at least one of a repeating unit represented by the following Formula (2) or a repeating unit represented by the following Formula (3); and a repeating unit represented by the following Formula (1), a content of the repeating unit represented by Formula (1) being 20% by mass or more but less than 50% by mass with respect to a total amount of the repeating units represented by Formulae (1) to (3).

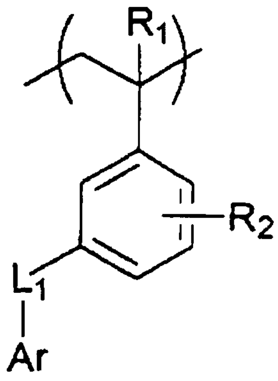

Formula (1)

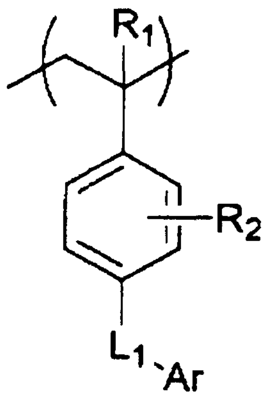

Formula (2)

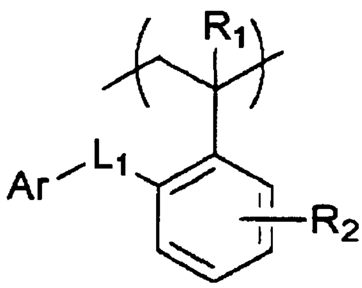

Formula (3)

In Formulae (1) to (3), $R_1$ represents a hydrogen atom or a methyl group; $R_2$ represents a hydrogen atom or a substituent; $L_1$ represents a single bond, or a divalent linkage group including at least one selected from the group consisting of an alkylene group having 1 to 12 carbon atoms, an alkenylene group having 2 to 12 carbon atoms, an oxyalkylene group having 2 to 6 carbon atoms, -CO-, $-N(R_3)-$, $-CON(R_3)-$, -COO-, -O-, -S-, - SO- and $-SO_2-$; $R_3$ represents a hydrogen atom or an alkyl group having 1 to 6 carbon atoms; Ar represents a monovalent group derived from: a condensed aromatic ring compound having 8 or more carbon atoms; a hetero ring compound condensed with (an) aromatic ring(s), or a compound containing two or more benzene rings linked to each other.

<2> The water-based pigment composition of the item <1>, wherein the content of the repeating unit represented by Formula (1) is 35% by mass or more but less than 50% by mass with respect to the total amount of the repeating units represented by Formulae (1) to (3).

<3> The water-based pigment composition of the item <1> or the item <2>, wherein Ar in Formulae (1) to (3) represents a monovalent group derived from naphthalene, biphenyl, triphenylmethane, phthalimide, acridone, fluorene, anthracene, phenanthrene, diphenylmethane, naphthalimide or carbazole.

<4> The water-based pigment composition of any one of the items <1> to <3>, wherein $L_1$ in Formulae (1) to (3) represents a divalent linkage group including at least one selected from the group consisting of an alkylene group having 1 to 6 carbon atoms, -CO-, $-N(R_3)-$ and -O-, and $R_3$ represents a hydrogen atom or an alkyl group having 1 to 6 carbon atoms.

<5> The water-based pigment composition of any one of the items <1> to <4>, wherein the ionic group is an anionic group.

<6> The water-based pigment composition of any one of the items <1> to <5>, wherein the ionic group is a carboxy group.

<7> The water-based pigment composition of any one of the items <1> to <6>, wherein a content of the repeating unit including an ionic group is 3% by mass to 20% by mass with respect to a total mass of the dispersant.

<8> The water-based pigment composition of any one of the items <1> to <7>, wherein the dispersant further comprises a repeating unit represented by the following Formula (4).

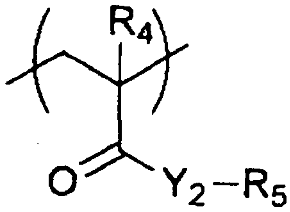

Formula (4)

In Formula (4), $R_4$ represents a hydrogen atom or a methyl group; $Y_2$ represents an oxygen atom or $-N(R_6)-$; $R_6$ represents a hydrogen atom or an alkyl group; and $R_5$ represents a straight chain or branched alky group having 1

to 20 carbon atoms, an alicyclic alky group having 1 to 20 carbon atoms, a phenyl group, or a group derived from an alkyl ether compound of oligoethylene glycol having 2 to 16 carbon atoms.
<9> The water-based pigment composition of the item <8>, wherein, in Formula (4), $Y_2$ represents an oxygen atom, -NH- or -N($CH_3$)-; $R_5$ is a methyl group, an ethyl group, a propyl group, an isopropyl group or a phenoxyethyl group.
<10> The water-based pigment composition of the item <8> or the item <9>, wherein the content of the repeating unit represented by Formula (4) is 20% by mass to 95% by mass with respect to a total mass of the dispersant.
<11> A producing method of a water-based pigment dispersion, the method including: obtaining a mixture by mixing the dispersant of any one of the items <1> to <10>, a pigment, an organic solvent capable of dissolving the dispersant, and water or a water-based carrier medium which contains water and at least one organic solvent; and removing at least a part of the organic solvent capable of dissolving the dispersant from the mixture.
<12> A water-based ink for inkjet recording, including a water-based pigment dispersion obtained by the producing method of a water-based pigment dispersion of the item <11>.

The foregoing description of the exemplary embodiments of the present invention has been provided for the purposes of illustration and description. It is not intended to be exhaustive or to limit the invention to the precise forms disclosed. The embodiments were chosen and described in order to best explain the principles of the invention and its practical applications, thereby enabling others skilled in the art to understand the invention for various embodiments and with the various modifications as are suited to the particular use contemplated.
It will be obvious to those having skill in the art that many changes may be made in the above-described details of the preferred embodiments of the present invention.

## Claims

**1.** A water-based pigment composition comprising:

a pigment;
a dispersant; and
water,
the dispersant comprising:

a repeating unit including an ionic group; **and the dispersant further comprising:**

at least one of a repeating unit represented by the following Formula (2) or a repeating unit represented by the following Formula (3); and
a repeating unit represented by the following Formula (1), a content of the repeating unit represented by Formula (1) being 20% by mass or more but less than 50% by mass with respect to a total amount of repeating units represented by Formulae (1) to (3):

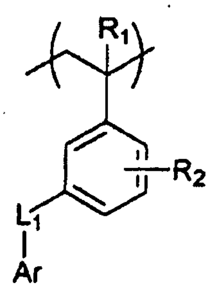
Formula (1)

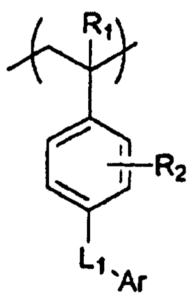
Formula (2)

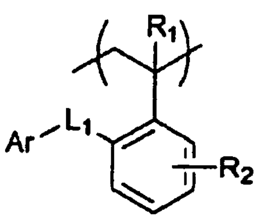
Formula (3)

wherein, in Formulae (1) to (3), $R_1$ represents a hydrogen atom or a methyl group;
$R_2$ represents a hydrogen atom or a substituent; $L_1$ represents a single bond, or a divalent linkage group including at least one selected from the group consisting of an alkylene group having 1 to 12 carbon atoms, an alkenylene group having 2 to 12 carbon atoms, an oxyalkylene group having 2 to 6 carbon atoms, -CO-, -N($R_3$)-, -CON($R_3$)-, -COO-, -O-, -S-, -SO- and- $SO_2$-; $R_3$ represents a hydrogen atom or an alkyl group having 1 to 6 carbon atoms; and Ar represents a monovalent group derived from: a condensed aromatic ring compound having 8 or

more carbon atoms, a monovalent group derived from: a hetero ring compound condensed with (an) aromatic ring(s), or a monovalent group derived from: a compound containing two or more benzene rings linked to each other.

**2.** The water-based pigment composition of claim 1, wherein the content of the repeating unit represented by Formula (1) is 35% by mass or more but less than 50% by mass with respect to the total amount of the repeating units represented by Formulae (1) to (3).

**3.** The water-based pigment composition of claim 1 or claim 2, wherein Ar in Formulae (1) to (3) represents a monovalent group derived from naphthalene, biphenyl, triphenylmethane, phthalimide, acridone, fluorene, anthracene, phenanthrene, diphenylmethane, naphthalimide or carbazole.

**4.** The water-based pigment composition of any one of claims 1 to 3, wherein $L_1$ in Formulae (1) to (3) represents a divalent linkage group including at least one selected from the group consisting of an alkylene group having 1 to 6 carbon atoms, -CO-, -N($R_3$)- and -O-, and $R_3$ represents a hydrogen atom or an alkyl group having 1 to 6 carbon atoms.

**5.** The water-based pigment composition of any one of claims 1 to 4, wherein the ionic group is an anionic group.

**6.** The water-based pigment composition of any one of claims 1 to 5, wherein the ionic group is a carboxy group.

**7.** The water-based pigment composition of any one of claims 1 to 6, wherein a content of the repeating unit including an ionic group is 3% by mass to 20% by mass with respect to a total mass of the dispersant.

**8.** The water-based pigment composition of any one of claims 1 to 7, wherein the dispersant further comprises a repeating unit represented by the following Formula (4):

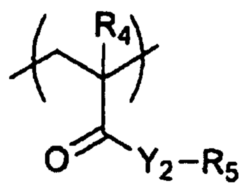

Formula (4)

wherein, in Formula (4), R4 represents a hydrogen atom or a methyl group; $Y_2$ represents an oxygen atom or -N ($R_6$)-; $R_6$ represents a hydrogen atom or an alkyl group; and $R_5$ represents a straight chain or branched alkyl group having 1 to 20 carbon atoms, an alicyclic alkyl group having 1 to 20 carbon atoms, a phenyl group, or a group derived from an alkyl ether compound of oligoethylene glycol having 2 to 16 carbon atoms.

**9.** The water-based pigment composition of claim 8, wherein, in Formula (4), $Y_2$ represents an oxygen atom, -NH- or -N($CH_3$)-; and $R_5$ is a methyl group, an ethyl group, a propyl group, an isopropyl group or a phenoxyethyl group.

**10.** The water-based pigment composition of claim 8 or claim 9, wherein the content of the repeating unit represented by Formula (4) is 20% by mass to 95% by mass with respect to a total mass of the dispersant.

**11.** A producing method of a water-based pigment dispersion comprising:

obtaining a mixture by mixing the dispersant of any one of claims 1 to 10, a pigment, an organic solvent capable of dissolving the dispersant, and water or a water-based carrier medium which contains water and at least one organic solvent; and

removing at least a part of the organic solvent capable of dissolving the dispersant from the mixture.

**12.** A water-based ink for inkjet recording, comprising a water-based pigment dispersion obtained by the producing method of a water-based pigment dispersion of claim 11.

**Patentansprüche**

**1.** Pigmentzusammensetzung auf Wasserbasis, umfassend:

ein Pigment;
ein Dispergiermittel; und
Wasser,
wobei das Dispergiermittel umfasst:

eine Struktureinheit, die eine ionische Gruppe enthält; und wobei das Dispergiermittel ferner umfasst:

mindestens einen Vertreter einer Struktureinheit mit der nachfolgenden Formel (2) oder einer Struktureinheit mit der nachfolgenden Formel (3); und
eine Struktureinheit mit der nachfolgenden Formel (1), wobei ein Gehalt der Struktureinheit mit der Formel (1) 20 Massen-% oder mehr, aber weniger als 50 Massen-% beträgt, bezogen auf die Gesamtmenge der Struktureinheiten mit den Formeln (1) bis (3):

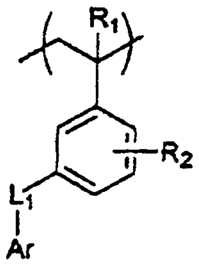
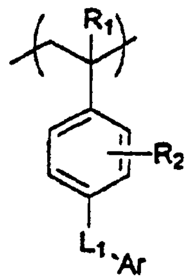
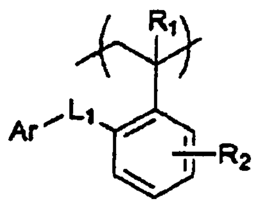

Formel (1) Formel (2) Formel (3)

wobei in den Formeln (1) bis (3) gilt:
$R_1$ stellt ein Wasserstoffatom oder eine Methylgruppe dar; $R_2$ stellt ein Wasserstoffatom oder einen Substituenten dar; $L_1$ stellt eine Einfachbindung oder eine zweiwertige verbindenden Gruppe dar, die mindestens eine Gruppe, ausgewählt aus der Gruppe, bestehend aus einer Alkylengruppe mit 1 bis 12 Kohlenstoffatomen, einer Alkenylengruppe mit 2 bis 6 Kohlenstoffatomen, einer Oxyalkylengruppe mit 2 bis 6 Kohlenstoffatomen, -CO-, $-N(R_3)-$, $-CON(R_3)-$, -COO-, -O-, -S-, -SO- und $-SO_2-$, einschließt; $R_3$ stellt ein Wasserstoffatom oder eine Alkylgruppe mit 1 bis 6 Kohlenstoffatomen dar; und Ar stellt eine einwertige Gruppe dar, die sich ableitet von: einer kondensierten, aromatischen Ringverbindung mit 8 oder mehr Kohlenstoffatomen, einer einwertigen Gruppe, die sich ableitet von: einer Heteroringverbindung, die mit (einem) aromatischen Ring(en) kondensiert ist, oder eine einwertige Gruppe, die sich ableitet von: einer Verbindung, die zwei oder mehr miteinander verknüpfte Benzolringe enthält.

**2.** Pigmentzusammensetzung auf Wasserbasis gemäß Anspruch 1, wobei der Gehalt der Struktureinheit mit der Formel (1) 35 Massen-% oder mehr, aber weniger als 50 Massen-% beträgt, bezogen auf die Gesamtmenge der Struktureinheiten mit den Formeln (1) bis (3).

**3.** Pigmentzusammensetzung auf Wasserbasis gemäß Anspruch 1 oder Anspruch 2, wobei Ar in den Formeln (1) bis (3) eine einwertige Gruppe darstellt, die sich von Naphthalen, Biphenyl, Triphenylmethan, Phthalimid, Acridon, Fluoren, Anthracen, Phenanthren, Diphenylmethan, Naphthalimid oder Carbazol ableitet.

**4.** Pigmentzusammensetzung auf Wasserbasis gemäß einem der Ansprüche 1 bis 3, wobei $L_1$ in den Formeln (1) bis (3) eine zweiwertige verbindende Gruppe darstellt, die wenigstens eine Gruppe, ausgewählt aus der Gruppe, bestehend aus einer Alkylengruppe mit 1 bis 6 Kohlenstoffatomen, -CO-, $-N(R_3)-$ und -O-, einschließt, und $R_3$ ein Wasserstoffatom oder eine Alkylgruppe mit 1 bis 6 Kohlenstoffatomen darstellt.

**5.** Pigmentzusammensetzung auf Wasserbasis gemäß einem der Ansprüche 1 bis 4, wobei die ionische Gruppe eine anionische Gruppe ist.

**6.** Pigmentzusammensetzung auf Wasserbasis gemäß einem der Ansprüche 1 bis 5, wobei die ionische Gruppe eine

Carboxygruppe ist.

**7.** Pigmentzusammensetzung auf Wasserbasis gemäß einem der Ansprüche 1 bis 6, wobei ein Gehalt der Struktureinheit, die eine ionische Gruppe enthält, 3 Massen-% bis 20 Massen-% beträgt, bezogen auf die Gesamtmasse des Dispergiermittels.

**8.** Pigmentzusammensetzung auf Wasserbasis gemäß einem der Ansprüche 1 bis 7, wobei das Dispergiermittel eine Struktureinheit mit der nachfolgenden Formel (4) umfasst:

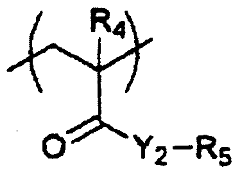

Formel (4)

wobei in der Formel (4) gilt:

$R_4$ stellt ein Wasserstoffatom oder eine Methylgruppe dar; $Y_2$ stellt ein Sauerstoffatom oder -N($R_6$)- dar; $R_6$ stellt ein Wasserstoffatom oder eine Alkylgruppe dar;
und $R_5$ stellt eine lineare oder verzweigte Alkylgruppe mit 1 bis 20 Kohlenstoffatomen, eine alicyclische Alkylgruppe mit 1 bis 20 Kohlenstoffatomen, eine Phenylgruppe oder eine Gruppe dar, die sich von einer Alkyletherverbindung eines Oligoethylenglykols mit 2 bis 16 Kohlenstoffatomen ableitet.

**9.** Pigmentzusammensetzung auf Wasserbasis gemäß Anspruch 8, wobei, in der Formel (4), $Y_2$ ein Sauerstoffatom, -NH-oder -N($CH_3$)- darstellt; und $R_5$ eine Methylgruppe, eine Ethylgruppe, eine Propylgruppe, eine Isopropylgruppe oder eine Phenoxyethylgruppe ist.

**10.** Pigmentzusammensetzung auf Wasserbasis gemäß Anspruch 8 oder Anspruch 9, wobei der Gehalt der Struktureinheit mit der Formel (4) 20 Massen-% bis 95 Massen-% beträgt, bezogen auf die Gesamtmasse des Dispergiermittels.

**11.** Verfahren zur Herstellung einer Pigmentdispersion auf Wasserbasis, umfassend:

Erhalten einer Mischung, indem das Dispergiermittel gemäß einem der Ansprüche 1 bis 10, ein Pigment, ein organisches Lösungsmittel, das zur Lösung des Dispergiermittels fähig ist, und Wasser oder ein Trägermedium auf Wasserbasis, das Wasser und wenigstens ein organisches Lösungsmittel enthält, gemischt werden; und
Entfernen wenigstens eines Teils des organischen Lösungsmittels, das zur Lösung des Dispergiermittels fähig ist, aus der Mischung.

**12.** Tinte auf Wasserbasis zur Tintenstrahlaufzeichnung, umfassend eine Pigmentdispersion auf Wasserbasis, die durch das Verfahren zur Herstelllung einer Pigmentdispersion auf Wasserbasis gemäß Anspruch 11 erhalten wird.

## Revendications

**1.** Composition de pigment à base d’eau comprenant :

un pigment ;
un dispersant ; et
de l’eau,
le dispersant comprenant :

une unité répétée incluant un groupe ionique ; et le dispersant comprenant en outre :

au moins l’une d’une unité répétée représentée par la formule (2) suivante ou d’une unité répétée

représentée par la formule (3) suivante ; et
une unité répétée représentée par la formule (1) suivante, une teneur de l'unité répétée représentée par la formule (1) étant 20 % en masse ou plus mais moins de 50 % en masse par rapport à une quantité totale d'unités répétées représentées par les formules (1) à (3) :

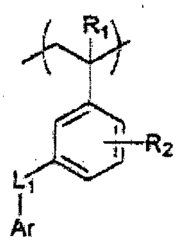
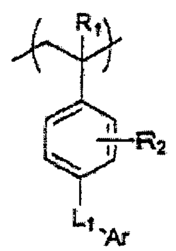
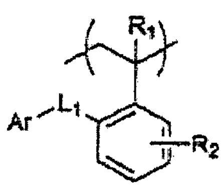

Formule (1) Formule (2) Formule (3)

où, dans les formules (1) à (3), $R_1$ représente un atome d'hydrogène ou un groupe méthyle ; $R_2$ représente un atome d'hydrogène ou un substituant ; $L_1$ représente une simple liaison, ou un groupe de liaison divalent incluant au moins un choisi dans le groupe consistant en un groupe alkylène ayant 1 à 12 atomes de carbone, un groupe alcénylène ayant 2 à 12 atomes de carbone, un groupe oxyalkylène ayant 2 à 6 atomes de carbone, -CO-, $-N(R_3)-$, $-CON(R_3)-$, -COO-, -O-, -S-, -SO- et $-SO_2-$; $R_3$ représente un atome d'hydrogène ou un groupe alkyle ayant 1 à 6 atomes de carbone ; et Ar représente un groupe monovalent dérivé de : un composé cyclique aromatique condensé ayant 8 atomes de carbone ou plus, un groupe monovalent dérivé de : un composé hétérocyclique condensé avec un ou des cycles aromatiques, ou un groupe monovalent dérivé de : un composé contenant deux ou plusieurs cycles benzéniques liés entre eux.

2. Composition de pigment à base d'eau selon la revendication 1, où la teneur de l'unité répétée représentée par la formule (1) est 35 % en masse ou plus mais moins de 50 % en masse par rapport à la quantité totale des unités répétées représentées par les formules (1) à (3).

3. Composition de pigment à base d'eau selon la revendication 1 ou la revendication 2, où Ar dans les formules (1) à (3) représente un groupe monovalent dérivé de naphtalène, biphényle, triphénylméthane, phtalimide, acridone, fluorène, anthracène, phénanthrène, diphénylméthane, naphtalimide ou carbazole.

4. Composition de pigment à base d'eau selon l'une quelconque des revendications 1 à 3, où $L_1$ dans les formules (1) à (3) représente un groupe de liaison divalent incluant au moins un choisi dans le groupe consistant en un groupe alkylène ayant 1 à 6 atomes de carbone, -CO-, $-N(R_3)-$ et -O-, et $R_3$ représente un atome d'hydrogène ou un groupe alkyle ayant 1 à 6 atomes de carbone.

5. Composition de pigment à base d'eau selon l'une quelconque des revendications 1 à 4, où le groupe ionique est un groupe anionique.

6. Composition de pigment à base d'eau selon l'une quelconque des revendications 1 à 5, où le groupe ionique est un groupe carboxy.

7. Composition de pigment à base d'eau selon l'une quelconque des revendications 1 à 6, où une teneur de l'unité répétée incluant un groupe ionique est 3 % en masse à 20 % en masse par rapport à une masse totale du dispersant.

8. Composition de pigment à base d'eau selon l'une quelconque des revendications 1 à 7, où le dispersant comprend en outre une unité répétée représentée par la formule (4) suivante :

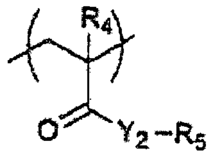

Formule (4)

où, dans la formule (4), $R_4$ représente un atome d'hydrogène ou un groupe méthyle ; $Y_2$ représente un atome d'oxygène ou -N($R_6$)- ; $R_6$ représente un atome d'hydrogène ou un groupe alkyle ; et $R_5$ représente un groupe alkyle linéaire ou ramifié ayant 1 à 20 atomes de carbone, un groupe alkyle alicyclique ayant 1 à 20 atomes de carbone, un groupe phényle ou un groupe dérivé d'un composé alkyléther d'oligoéthylèneglycol ayant 2 à 16 atomes de carbone.

**9.** Composition de pigment à base d'eau selon la revendication 8, où, dans la formule (4), $Y_2$ représente un atome d'oxygène, -NH- ou- N ($CH_3$)- ; et $R_5$ est un groupe méthyle, un groupe éthyle, un groupe propyle, un groupe isopropyle ou un groupe phénoxyéthyle.

**10.** Composition de pigment à base d'eau selon la revendication 8 ou la revendication 9, où la teneur de l'unité répétée représentée par la formule (4) est 20 % en masse à 95 % en masse par rapport à une masse totale du dispersant.

**11.** Procédé de production d'une dispersion de pigment à base d'eau comprenant :

l'obtention d'un mélange par mélange du dispersant selon l'une quelconque des revendications 1 à 10, d'un pigment, d'un solvant organique capable de dissoudre le dispersant, et d'eau ou d'un milieu vecteur à base d'eau qui contient de l'eau et au moins un solvant organique ; et
le retrait d'au moins une partie du solvant organique capable de dissoudre le dispersant du mélange.

**12.** Encre à base d'eau pour enregistrement par jet d'encre, comprenant une dispersion de pigment à base d'eau obtenue par le procédé de production d'une dispersion de pigment à base d'eau selon la revendication 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20050124726 A
- JP 2001172522 A
- WO 2008123601 A2
- EP 1739141 A1
- JP 2007100071 A
- JP 58185677 A
- JP 61190537 A
- JP 2000782 A
- JP 5197075 A
- JP 9034057 A
- JP 46002784 A
- JP 5194483 A
- US 3214463 A
- JP 48030492 B
- JP 56021141 B
- JP 10088106 A
- JP 4298503 A
- JP 8053427 A
- JP 8239368 A
- JP 10182621 A
- JP 8501291 A
- JP 62215272 A
- JP 59157636 A
- JP 2003322926 A
- JP 2004325707 A
- JP 2004309806 A


### Non-patent literature cited in the description


- **R. SOLARO ; G. GALLI ; F. MASI ; A. LEDWITH ; E. CHIELLINI.** Synthesis, stereochemistry and fluorescence properties of polystyrenes having carbazole substituents. *Eur. Polym. J.,* 1983, vol. 19 (5), 433-438
- **J. BRANDRUP.** Polymer Handbook. Wiley Interscience, 1975, 1-483
- **TEIJI TSURUTA.** Polymer Synthesis Method. The Nikkan Kogyo Shimbun, Ltd, 1971
- **TAKAYUKI OHTSU ; MASAYOSHI KINOSHITA.** Experimental Method of Polymer Synthesis. Kagaku-Dojin Publishing Company, Inc, 1972, 124-154
- **T. C. PATTON.** Paint Flow and Pigment Dispersion. John Wiley and Sons, 1964
- *Research Disclosure No. 308119,* 1989